# EUROPEAN PATENT SPECIFICATION

(11) **EP 3 426 705 B1**
(45) Date of publication and mention of the grant of the patent: **18.12.2019**
(21) Application number: 17707561.1
(22) Date of filing: 28.02.2017
(51) Int. Cl.: C08F 292/00, C08F 290/06, C08G 65/00, C08G 65/333, C08L 71/00

(54) **POLYUNSATURATED COMPOUND FOR CURING FLUOROELASTOMER COMPOSITIONS**
MEHRFACH UNGESÄTTIGTE VERBINDUNG ZUR HÄRTUNG VON FLUORELASTOMERZUSAMMENSETZUNGEN
COMPOSÉ POLYINSATURÉ DE DURCISSEMENT DE COMPOSITIONS DE FLUOROÉLASTOMÈRE

(30) Priority: 11.03.2016 EP 16159804
(43) Date of publication of application: 16.01.2019
(73) Proprietor: Solvay Specialty Polymers Italy S.p.A., 20021 Bollate (MI) (IT)
(72) Inventor: BOSSOLO, Stefano, 20015 Parabiago (MI) (IT); WLASSICS, Ivan Diego, 12075 Garessio (CN) (IT); CHERNYSHEVA, Liubov, 20149 Milano (IT); VICINO, Davide, 21042 Caronno Pertusella (VA) (IT)
(74) Representative: Benvenuti, Federica
(86) International application number: PCT/EP2017/054581
(87) International publication number: WO 2017/153203

(56) References cited:
- WO-A1-2004/104092
- WO-A1-2007/050600
- US-A- 3 845 051
- US-A- 5 266 650
- US-A- 5 384 374

## Description

### Cross-reference to related application

This application claims priority to European application No. 16159804.0 filed March 11th, 2016, the whole content of this application being incorporated herein by reference for all purposes.

### Technical Field

The present invention relates to novel polyunsaturated crosslinking agents useful as curing agents for fluoroelastomers, to a process for their production and their use, to fluoroelastomer compositions comprising the same, as well as to a process for producing fluororubber mouldings therefrom.

### Background Art

Vulcanized (per)fluoroelastomers are materials with excellent heat-resistance and chemical-resistance characteristics, which are generally used in the manufacture of technical articles such as sealing parts, pipes, oil seals and O-rings in which the leaktightness, the mechanical properties and the resistance to substances such as mineral oils, hydraulic fluids, solvents or chemical agents of diverse nature must be ensured over a wide range of working temperatures, from high to very low temperatures.

Low temperature flexibility refers to the temperature, at or below which an elastomer vulcanizate changes from an elastomeric, to a stiff, glassy state, at which point the vulcanizate is no longer flexible, and does not exhibit the ability to recover after being deformed. Several tests are useful for determining the lowest temperature at which fluoroelastomers retain their elastomeric properties, including Temperature of Retraction (TR-10), Glass Transition Temperature (Tg), and the like.

Fluoroelastomers in general have low temperature properties dictated by two factors: the size of the fluorine atom and the substituent fluorocarbon molecules (e.g. trifluoro and trifluoroalkoxy groups) and the various intermolecular molecular forces that come into play due to fluorine's high electronegativity.

Within this frame, efforts have been devoted in the past to the modification of the fluoroelastomer polymer chain structure, e.g. via incorporation of specific monomers having bulkier pendant side chains and/or to the provision of curable formulation possessing appropriate additives for extending elastomeric domain. The presence of a bulky branch group (methyl, trifluoromethyl or perfluoroalkoxy) causes the polymerization to create the "random walk" chain configuration that is necessary for a "rubbery" elastomer.

It is also worth reminding that compounding approaches have been pursued in this area, based on the incorporation of perfluoropolyethers additives, which, thanks to their miscibility with the fluoroelastomeric matrix, and more importantly, thanks to their very low Tg, may deliver advantages in overall low temperature behaviour of fluoroelastomer compounds comprising the same. In this area, EP 0222408 A (AUSIMONT SPA) 20.05.1987 discloses vulcanizable compositions of fluoroelastomers based on vinylidene fluoride, comprising a fluoropolyether as processing aid; similarly, US 4278776 (MONTEDISON SPA) 14.07.1981 discloses the use of perfluoropolyethers processing aids in VDF-based fluoroelastomers; in particular performances obtained with perfluoropolyether greases consisting of mixtures of an oil and PTFE particles were compared to those of a perfluoropolyether polyamide in curable fluoroelastomer compounds. In all these documents, adjunction of the perfluoropolyether processing adjuvant was found to be accompanied by a significant reduction of hardness and mechanical properties (modulus). Also, these materials, due to their inherent volatility, undergo migration phenomena and could exude from the cured parts in high temperature operating conditions, so that failures occur and performances of said parts are significantly affected.

Now, dynamic seal applications with fluoroelastomer-based products may require parts to maintain elastomeric behaviour at temperatures as low as -40°C, and in some cases, even lower temperatures. This low temperature rubber behaviour is still required to be associated to suitable mechanical performances (tensile strength, hardness).

With these regards, it is generally understood that crosslinking, which is an essential processing step for transforming soft fluoroelastomer base gum into performing rubbers possessing required mechanical properties, introduces constraints in the three-dimensional structure of the cured material. Among well-known polyunsaturated crosslinking compounds which are routinely used for the curing of fluoroelastomers, mention can be notably made of triallylisocyanurate, of formula: 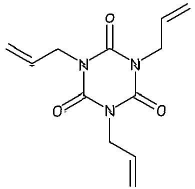 this compound being possibly able to connect up to three fluoroelastomer chains in a constrained cross-linked structure.

Now, it is believed that an increase in crosslinking density, which may be beneficial for mechanical performances, may nevertheless reduce the macromolecular chain mobility and flexibility, as associated to low temperature behaviour, and having a detrimental effect with these regards.

There is hence a continuous search for curing systems which, while delivering cross-linked structure with expected crosslinking density, so delivering mechanical properties as required for different fields of use, yet maintain or even improve the low temperature behaviour of the fluoroelastomer base gum, and hence extending continuous use domain for cured parts down to -40°C or beyond, while still maintaining all advantageous performances (mechanical properties, sealing properties).

US 5 266 650 discloses a fluorocarbon elastomer gum compounded with fluorinated ether compositions, the resulting compounded gum is shaped and heated to form a cured shaped article such as automotive fuel line hose or O-ring.

There is thus still a continuous quest in the art for fluoroelastomer compositions that can deliver cured parts having low temperature elastomeric behaviour.

The object of the present invention is therefore to provide a novel polyunsaturated compound for the curing of fluoroelastomers which, when used as crosslinking agent (alone or in combination with other polyunsaturated curing agents), enables obtaining cured parts possessing an improved mechanical properties/low temperature behaviour compromise, making hence available solutions for addressing requirements for extreme continuous operation conditions (e.g. -40°C or below).

### Summary of invention

The invention thus provides for a polyunsaturated compound having formula (I) [compound (DAIC-PFPE)]:

T^{A}-O-R_{f}-T^{A}' (I)

wherein:
- R_{f} is (per)fluoropolyoxyalkylene chain [chain (R_{f})] comprising recurring units having at least one catenary ether bond and at least one fluorocarbon moiety;
- T^{A} and T^{A}', equal to or different from each other, are selected from the group consisting of:
   (i) C₁-C₂₄ (hydro)(fluoro)carbon groups, possibly comprising one or more than one of H, O, and Cl; and
   (ii) (hydro)(fluoro)carbon group comprising at least one diallylisocyanurate group of formula: 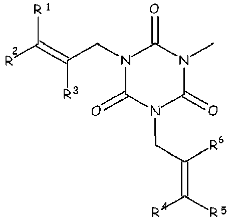 wherein each of R¹, R², R³, R⁴, R⁵, and R⁶ is, independently, a hydrogen atom or a C₁-C₃ hydrocarbon group, preferably a hydrogen atom (group T ^{DAIC}),
      with the provisio that at least one of T^{A} and T^{A}' is a group T^{DAIC}, as above detailed.

The Applicant has surprisingly found that this diallylisocyanurate (per)fluoropolyether derivative, associating diallylisocyanurate group(s), acting as polyunsaturated reactive moieties for crosslinking, to a flexible (per)fluoropolyoxyalkylene chain conferring increased molecular mobility, is an effective crosslinking agent, either when used alone or in combination with traditional polyunsaturated curing agents, delivering an improved compromise between low temperature behaviour and mechanical properties.

The expression diallylisocyanurate (per)fluoropolyether derivative and compound (DAIC-PFPE) are hereby understood to designate one or more than one compounds of formula (I) as above detailed.

The (per)fluoropolyoxyalkylene chain [chain (R_{f})] of compound (DAIC-PFPE) is preferably a chain comprising a plurality of recurring units (R₁), said recurring units having general formula: -(CF₂)ₖ-CFZ-O-, wherein k is an integer of from 0 to 3 and Z is selected between a fluorine atom and a C₁-C₆ perfluoro(oxy)alkyl group.

Chain (R_{f}) of the compound (DAIC-PFPE) more preferably complies with formula:

-(CF₂CF₂O)_{a'}(CFYO)_{b'}(CF₂CFYO)_{c'}(CF₂O)_{d'}(CF₂(CF₂)_{z}CF₂O)_{e'}-,

wherein the recurring units are statistically distributed along the (per)fluoropolyoxyalkylene chain, wherein:
- Y is a C₁-C₅ perfluoro(oxy)alkyl group;
- z is 1 or 2;
- a', b', c', d', e' are integers ≥ 0.

Most preferably, chain (R_{f}) of compound (DAIC-PFPE) complies with formula:

-(CF₂CF₂O)_{a"}(CF₂O)_{b"}(CF₂(CF₂)_{z}CF₂O)_{c"}-, wherein:

- z is 1 or 2;
- a", b", c" are integers ≥ 0.

Chain (R_{f}) is generally selected so as to possess a number averaged molecular weight of 500 to 6000, preferably of 750 to 5000, even more preferably of 1000 to 4500.

Generally, compound (DAIC-PFPE) complies with formula (II):

T^{B}-O-R*_{f}-T^{B}' (II)

wherein:
R*_{f} is a chain (R_{f}), as above detailed;
each of T^{B} and T^{B}', equal to or different from each other, are selected from
   (j) a group of any of formulae -CF₃, -CF₂Cl, -CF₂CF₃, -CF(CF₃)₂ , -CF₂H, -CFH₂, -CF₂CH₃, -CF₂CHF₂, -CF₂CH₂F, -CFZ*CH₂OH, -CFZ*COOH, -CFZ*COORₕ and -CFZ*-CH₂(OCH₂CH₂)ₖ-OH, wherein k is ranging from 0 to 10, wherein Z* is F or CF₃; Rₕ is a C₁-C₆ hydrocarbon chain; and
   (jj) a group T^{DAIC*}, of any of formulae -CFZ*CH₂-DAIC, and -CFZ*-CH₂ (OCH₂CH₂)ₖ-DAIC, wherein k is ranging from 0 to 10, Z* is F or CF₃; and DAIC is a diallylisocyanurate group of formula: 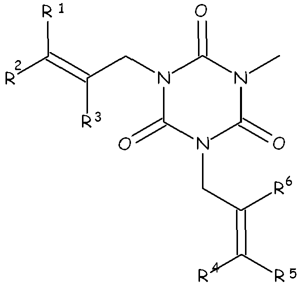 wherein each of R¹, R², R³, R⁴, R⁵, and R⁶ is, independently, a hydrogen atom or a C₁-C₃ hydrocarbon group, preferably a group of formula: 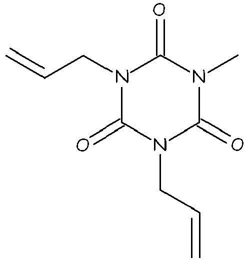 ,with the provisio that at least one of T^{B} and T^{B}' is a group T^{DAIC*}, as above detailed.

Compound (DAIC-PFPE) preferably complies with formula (III):

T^{C}-O-(CF₂CF₂O)_{a'}(CFYO)_{b'}(CF₂CFYO)_{c'}(CF₂O)_{d'}(CF₂(CF₂)_{z}CF₂O)_{e'}-T^{C}',

wherein:
- Y is a C₁-C₅ perfluoro(oxy)alkyl group;
- z is 1 or 2;
- a', b', c', d', e' are integers ≥ 0;
- each of T^{C} and T^{C}', equal to or different from each other, are selected from
   (k) a group of any of formulae -CF₃, -CF₂Cl, -CF₂CF₃, -CF(CF₃)₂ , -CF₂H, -CFH₂, -CF₂CH₃, -CF₂CHF₂, -CF₂CH₂F, -CFZ*CH₂OH, and -CFZ*-CH₂ (OCH₂CH₂)ₖ-OH, wherein k is ranging from 0 to 10, wherein Z* is F or CF₃ ; and
   (kk) a group T^{DAIC"} of any of formulae -CFZ*CH₂-DAIC, and -CFZ*-CH₂ (OCH₂CH₂)ₖ-DAIC, wherein Z* is F or CF₃; k is ranging from 0 to 10, and DAIC is a diallylisocyanurate group of formula: 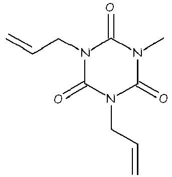 with the provisio that at least one of T^{B} and T^{B}' is a group T^{DAIC"}, as above detailed.

Compounds (DAIC-PFPE) as above detailed, may be provided, as a consequence of their synthetic methods and precursors used, as mixtures of compounds comprising different chemical entities differing because of the nature and length of the (per)fluoropolyoxyalkylene chain, maybe comprise variable fractions of compounds wherein both chain ends are (hydro)(fluoro)carbon groups comprising at least one diallylisocyanurate and of compounds wherein only one chain end is (hydro)(fluoro)carbon groups comprising at least one diallylisocyanurate, and maybe associated to minor amounts of side products of similar structure, but wherein both of chain ends of the (per)fluoropolyoxyalkylene chain fails to be bound to a diallylisocyanurate group.

With regards to the proportion of so-called "mono" and "di" functional compounds, it is generally understood that best results have been achieved when the compound (DAIC-PFPE) consisted of a majority of compounds of formula (I) [T^{A}-O-R_{f}-T^{A}'] as above detailed, wherein both T^{A} and T^{A}' were groups T^{DAIC}, as above detailed [di-functional (DAIC-PFPE)], and a minor amount of compounds of formula (I) [T^{A}-O-R_{f} -T^{A}'] as above detailed, wherein only one of T^{A} and T^{A}' is a group T^{DAIC}, the other group being free from diallylisocyanurate (DAIC) moiety [mono-functional (DAIC-PFPE)].

While di-functional (DAIC-PFPE) and mono-functional (DAIC-PFPE) may be separately and individually used in a fluoroelastomer composition, the compound (DAIC-PFPE) is generally a mixture of di-functional (DAIC-PFPE) and mono-functional (DAIC-PFPE). When the compound (DAIC-PFPE) is provided as a mixture of compounds (DAIC-PFPE), in the said compounds (DAIC-PFPE) mixture, the amount of di-functional (DAIC-PFPE) compounds and mono-functional (DAIC-PFPE) compounds are generally such that the groups T^{DAIC} are representative of at least 80 % mol, preferably at least 85 % moles, more preferably at least 90 % moles of all end groups of compounds (DAIC-PFPE).

While it may be possible to isolate compound (DAIC-PFPE) as pure compounds, very minor amounts of the said side products are not detrimental, and to the sake of economy, may be tolerated in admixture with compound (DAIC-PFPE). The amount of those "non-functional" compounds, which may be tolerated in admixture with compound (DAIC-PFPE) is generally such that the overall amount of end groups free from DAIC is of less than 10 % moles, preferably less than 7 % moles, more preferably less than 5 % moles, with respect to the total number of end groups of the mixture of compounds (DAIC-PFPE) and non-functional side products.

Generally, side products of compound (DAIC-PFPE) may comply with formula (IV):

W-O-R_{f}-W' (IV)

wherein:
R_{f} is a chain R_{f}, as above detailed;
each of W and W', equal to or different from each other, are selected from:
   - a group of any of formulae -CF₃, -CF₂Cl, -CF₂CF₃, -CF(CF₃)₂ , -CF₂H, -CFH₂, -CF₂CH₃, -CF₂CHF₂, -CF₂CH₂F, -CFZ*CH₂OH, -CFZ*COOH, -CFZ*COORₕ and -CFZ*-CH₂(OCH₂CH₂)ₖ-OH, wherein k is ranging from 0 to 10, wherein Z* is F or CF₃; Rₕ is a hydrocarbon chain.

Side products more recurrently found may comply with formula (V):

W*-O-(CF₂CF₂O)_{a'}(CFYO)_{b'}(CF₂CFYO)_{c'}(CF₂O)_{d'}(CF₂(CF₂)_{z}CF₂O)_{e'}-W*',

wherein:
- Y is a C₁-C₅ perfluoro(oxy)alkyl group;
- z is 1 or 2;
- a', b', c', d', e' are integers ≥ 0;
- each of W* and W*', equal to or different from each other, are selected from groups of any of formulae -CF₃, -CF₂Cl, -CF₂CF₃, -CF(CF₃)₂ , -CF₂ H, -CFH₂, -CF₂CH₃, -CF₂CHF₂, -CF₂CH₂F, -CFZ*CH₂OH, -CFZ*COOH, -CFZ*COORₕ and -CFZ*-CH₂(OCH₂CH₂)ₖ-OH, wherein k is an integer comprised ranging from 0 to 10, wherein Z* is F or CF₃; Rₕ is a hydrocarbon chain.
Compounds (DAIC-PFPE) can be synthesized applying to available PFPE precursors suitable chemistry so as to introduce diallylisocyanurate groups in chain ends.

The invention also addresses a method for manufacturing compounds (DAIC-PFPE), said method comprising reacting a (per)fluoropolyether precursor compound comprising a (per)fluoropolyoxyalkylene chain [chain (R_{f})] comprising recurring units having at least one catenary ether bond and at least one fluorocarbon moiety, as above detailed, and possessing at least one reactive chain end, with at least one compound including a diallylisocyanurate group.

According to preferred embodiments, the method as above detailed includes reacting a hydroxylated (per)fluoropolyether precursor compound, comprising a chain (R_{f}) as above detailed, and at least one chain end comprising a hydroxyl group with at least one diallylisocyanurate of formula: 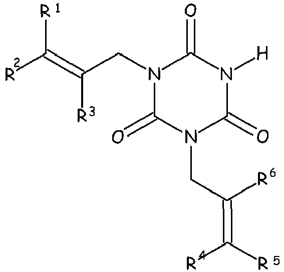 wherein each of R¹, R², R³, R⁴, R⁵, and R⁶ is, independently, a hydrogen atom or a C₁-C₃ hydrocarbon group; preferably with at least one diallylisocyanurate of formula:

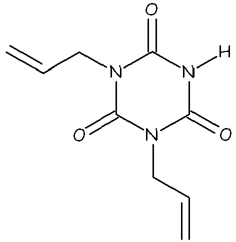

According to these embodiments, the hydroxylated (per)fluoropolyeher precursor compound generally complies with formula (VI):

J-O-R_{f}-J' (IV)

wherein:
R_{f} is a chain R_{f}, as above detailed;
each of J and J', equal to or different from each other, are selected from
   (I) groups of any of formulae -CF₃, -CF₂Cl, -CF₂CF₃, -CF(CF₃)₂ , -CF₂H, -CFH₂, -CF₂CH₃, -CF₂CHF₂, -CF₂CH₂F, -CFZ*COOH, and -CFZ*COORₕ wherein Z* is F or CF₃; Rₕ is a C₁-C₆ hydrocarbon chain; and
   (II) hydroxyl-containing groups [groups (J^{OH})] of any of formulae -CFZ*CH₂ OH, and -CFZ*-CH₂(OCH₂CH₂)ₖ-OH, wherein k is ranging from 0 to 10, wherein Z* is F or CF₃,
   with the provisio that at least one of J and J' is a group (J^{OH}), as above detailed.

More preferably the hydroxylated (per)fluoropolyeher precursor compound complies with formula (VII):

J*-O-(CF₂CF₂O)_{a'}(CFYO)_{b'}(CF₂CFYO)_{c'}(CF₂O)_{d'}(CF₂(CF₂)_{z}CF₂O)_{e'}-J*',

wherein:
- Y is a C₁-C₅ perfluoro(oxy)alkyl group;
- z is 1 or 2;
- a', b', c', d', e' are integers ≥ 0;
- each of J* and J*', equal to or different from each other, are selected from (m) groups of any of formulae -CF₃, -CF₂Cl, -CF₂CF₃, -CF(CF₃)₂ , -CF₂H, -CFH₂, -CF₂CH₃, -CF₂CHF₂, -CF₂CH₂F; and
(mm) hydroxyl-containing groups [groups (J^{OH'})] of any of formulae -CFZ*CH₂OH, and -CFZ*-CH₂(OCH₂CH₂)ₖ-OH, wherein k is ranging from 0 to 10, wherein Z* is F or CF₃.

According to certain embodiments, the hydroxylated (per)fluoropolyeher precursor compound may be preliminarily reacted with an activating compounds, so as to activate the hydroxyl end chain to nucleophilic substitution. Choice of the activating compound is not limited, and typical organic chemistry strategies may be applied.

The activating agent suitable for the method of the invention is preferably chosen among:
- sulfuryl halides of formula SO₂X, wherein X = Cl, Br;
- organic sulfonyl halides of formula: 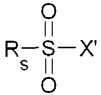 wherein Rₛ is a C₁-C₁₂ hydrocarbon radical, linear or branched, possibly fluorinated (preferably perfluorinated) and X' is Cl or Br;
- phosphonyl halides of formula: PX"₃, wherein X" = Cl, Br.

Non limitative examples of organic sulfonyl halides are notably:
- tosyl halides of formula: 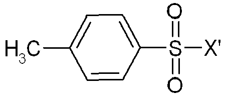
- brosyl halides of formula: 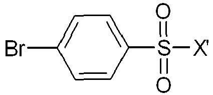
- perfluoroalkyl sulfonyl halides of formula: 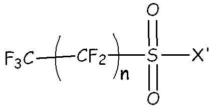 with n from 0 to 10, preferably from 0 to 5; including notably n=0 (triflyl halides); n=3 (nonafluorobutanesulfonyl halides);
- mesyl halides of formula: 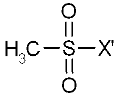 wherein X' in all formulae here above has the same meaning as above detailed.

As a result of the preliminary reaction with the activating agent, according to these embodiments, the hydroxyl chain end(s) of the hydroxylated (per)fluoropolyeher precursor compound is/are transformed into more reactive group(s), e.g. halides (when using sulfuryl halides or phosphonyl halides, as above detailed), or sulfonyl esters groups of formula -O-SO₂ -O-Rₛ, with Rₛ being a C₁-C₁₂ hydrocarbon radical, linear or branched, possibly fluorinated (preferably perfluorinated) (when using organic sulfonyl halides, as above detailed).

Reaction of these activated derivatives of the hydroxylated (per)fluoropolyeher precursor compound with -NH- group of diallyl isocyanurate has been found to proceed with high yields and selectivity, in particular when using nonafluorobutanesulfonyl ester derivatives.

The invention further pertains to a method for crosslinking a fluoroelastomer, comprising using compound (DAIC-PFPE), as above detailed.

More specifically, the invention is further directed to a (per)fluoroelastomer composition [composition (C)] comprising:
- a (per)fluoroelastomer [fluoroelastomer (A)] ; and
- at least one compound (DAIC-PFPE), as above detailed, said compound (DAIC-PFPE) being comprised in the composition in an amount of 0.5 to 50 phr, with respect to fluoroelastomer (A).

As said, compound (DAIC-PFPE) is comprised in the composition in an amount of 0.5 to 50 phr, with respect to fluoroelastomer (A). More specifically, compound (DAIC-PFPE) is present in composition (C) in an amount of at least 3 phr, preferably at least 5 phr, more preferably at least 7 phr, and/or in an amount of preferably at most 30 phr, more preferably at most 25 phr.

The amount of compound (DAIC-PFPE) will be optimized by one of ordinary skills in the art, considering notably whether any additional curing (co)agent is employed or whether the compound (DAIC-PFPE) is the sole polyunsaturated crosslinking agent used in the composition (C) for effecting curing of the fluoroelastomer (A).

For the purposes of this invention, the term "(per)fluoroelastomer" [fluoroelastomer (A)] is intended to designate a fluoropolymer resin serving as a base constituent for obtaining a true elastomer, said fluoropolymer resin comprising more than 10 % wt, preferably more than 30 % wt, of recurring units derived from at least one ethylenically unsaturated monomer comprising at least one fluorine atom (hereafter, (per)fluorinated monomer) and, optionally, recurring units derived from at least one ethylenically unsaturated monomer free from fluorine atom (hereafter, hydrogenated monomer) .

True elastomers are defined by the ASTM, Special Technical Bulletin, No. 184 standard as materials capable of being stretched, at room temperature, to twice their intrinsic length and which, once they have been released after holding them under tension for 5 minutes, return to within 10 % of their initial length in the same time.

Non limitative examples of suitable (per)fluorinated monomers are notably:
- C₂-C₈ fluoro- and/or perfluoroolefins, such as tetrafluoroethylene (TFE), hexafluoropropene (HFP), pentafluoropropylene, and hexafluoroisobutylene;
- C₂-C₈ hydrogenated monofluoroolefins, such as vinyl fluoride; 1,2-difluoroethylene, vinylidene fluoride (VDF) and trifluoroethylene (TrFE);
- (per)fluoroalkylethylenes complying with formula CH₂=CH-R_{f0}, in which R_{f0} is a C₁-C₆ (per)fluoroalkyl or a C₁-C₆ (per)fluorooxyalkyl having one or more ether groups ;
- chloro- and/or bromo- and/or iodo-C₂-C₆ fluoroolefins, like chlorotrifluoroethylene (CTFE);
- fluoroalkylvinylethers complying with formula CF₂=CFOR_{f1} in which R _{f1} is a C₁-C₆ fluoro- or perfluoroalkyl, e.g. -CF₃, -C₂F₅, -C₃F₇ ;
- hydrofluoroalkylvinylethers complying with formula CH₂=CFOR_{f1} in which R_{f1} is a C₁-C₆ fluoro- or perfluoroalkyl, e.g. -CF₃, -C₂F₅, -C₃F₇ ;
- fluoro-oxyalkylvinylethers complying with formula CF₂=CFOX₀, in which X₀ is a C₁-C₁₂ oxyalkyl, or a C₁-C₁₂ (per)fluorooxyalkyl having one or more ether groups; in particular (per)fluoro-methoxy-vinylethers complying with formula CF₂=CFOCF₂OR_{f2} in which R_{f2} is a C₁-C₆ fluoro- or perfluoroalkyl, e.g. -CF₃, -C₂F₅, -C₃F₇ or a C₁-C₆ (per)fluorooxyalkyl having one or more ether groups, like -C₂F₅-O-CF₃;
- functional fluoro-alkylvinylethers complying with formula CF₂=CFOY₀, in which Y₀ is a C₁-C₁₂ alkyl or (per)fluoroalkyl, or a C₁-C₁₂ oxyalkyl or a C₁-C₁₂ (per)fluorooxyalkyl, said Y₀ group comprising a carboxylic or sulfonic acid group, in its acid, acid halide or salt form;
- (per)fluorodioxoles, of formula : 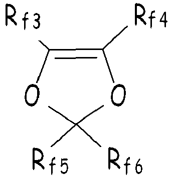 wherein each of R_{f3}, R_{f4}, R_{f5}, R_{f6}, equal to or different from each other, is independently a fluorine atom, a C₁-C₆ fluoro- or per(halo)fluoroalkyl, optionally comprising one or more oxygen atom, e.g. -CF₃, -C₂F₅, -C₃F ₇, -OCF₃, -OCF₂CF₂OCF₃.

Examples of hydrogenated monomers are notably hydrogenated alpha-olefins, including ethylene, propylene, 1-butene, diene monomers, styrene monomers, alpha-olefins being typically used.

Fluoroelastomers (A) are in general amorphous products or products having a low degree of crystallinity (crystalline phase less than 20 % by volume) and a glass transition temperature (T_{g}) below room temperature. In most cases, the fluoroelastomer (A) has advantageously a T_{g} below 10°C, preferably below 5°C, more preferably 0°C.

The fluoroelastomer (A) is preferably selected among:
(1) VDF-based copolymers, in which VDF is copolymerized with at least one comonomer selected from the group consisting of :
   (a) C₂-C₈ perfluoroolefins , such as tetrafluoroethylene (TFE), hexafluoropropylene (HFP);
   (b) hydrogen-containing C₂-C₈ olefins, such as vinyl fluoride (VF), trifluoroethylene (TrFE), hexafluoroisobutene (HFIB), perfluoroalkyl ethylenes of formula CH₂ = CH-R_{f}, wherein R_{f} is a C₁-C₆ perfluoroalkyl group;
   (c) C₂-C₈ fluoroolefins comprising at least one of iodine, chlorine and bromine, such as chlorotrifluoroethylene (CTFE);
   (d) (per)fluoroalkylvinylethers (PAVE) of formula CF₂ = CFOR_{f}, wherein R_{f} is a C₁-C₆ (per)fluoroalkyl group, preferably CF₃, C₂F₅, C₃F₇;
   (e) (per)fluoro-oxy-alkylvinylethers of formula CF₂ = CFOX, wherein X is a C₁-C₁₂ ((per)fluoro)-oxyalkyl comprising catenary oxygen atoms, e.g. the perfluoro-2-propoxypropyl group;
   (f) (per)fluorodioxoles having formula : 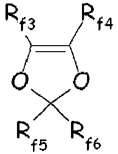 wherein each of R_{f3}, R_{f4}, R_{f5}, R_{f6}, equal to or different from each other, is independently selected from the group consisting of fluorine atom and C₁-C₆ (per)fluoroalkyl groups, optionally comprising one or more than one oxygen atom, such as notably -CF₃, -C₂F₅, -C₃F₇, -OCF₃, -OCF₂CF₂OCF ₃; preferably, perfluorodioxoles;
   (g) (per)fluoro-methoxy-vinylethers (MOVE, hereinafter) having formula:

      CF₂=CFOCF₂OR_{f2}

      wherein R_{f2} is selected from the group consisting of C₁-C₆ (per)fluoroalkyls; C₅-C₆ cyclic (per)fluoroalkyls; and C₂-C₆ (per)fluorooxyalkyls, comprising at least one catenary oxygen atom; R_{f2} is preferably -CF₂CF₃ (MOVE1); -CF₂CF₂OCF₃ (MOVE2); or -CF₃ (MOVE3);
   (h) C₂-C₈ non-fluorinated olefins (Ol), for example ethylene and propylene;
   (i) ethylenically unsaturated compounds comprising nitrile (-CN) groups, possibly (per)fluorinated; and
(2) TFE-based copolymers, in which TFE is copolymerized with at least one comonomer selected from the group consisting of (c), (d), (e), (g), (h) and (i) as above detailed .

Optionally, fluoroelastomer (A) of the present invention also comprises recurring units derived from a bis-olefin [bis-olefin (OF)] having general formula : 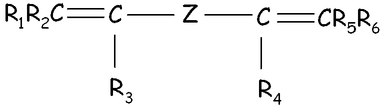 wherein R₁, R₂, R₃, R₄, R₅ and R₆, equal or different from each other, are H or C₁-C₅ alkyl; Z is a linear or branched C₁-C₁₈ hydrocarbon radical (including alkylene or cycloalkylene radical), optionally containing oxygen atoms, preferably at least partially fluorinated, or a
(per)fluoropolyoxyalkylene radical, e.g. as described in EP 661304 A (AUSIMONT SPA) 05.07.1995 .

The bis-olefin (OF) is preferably selected from the group consisting of those complying with formulae (OF-1), (OF-2) and (OF-3) : 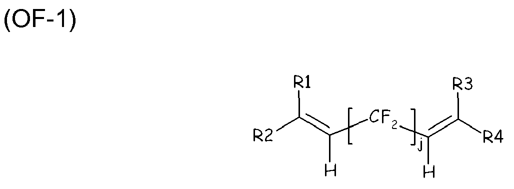 wherein j is an integer between 2 and 10, preferably between 4 and 8, and R1, R2, R3, R4, equal or different from each other, are H, F or C₁₋₅ alkyl or (per)fluoroalkyl group; 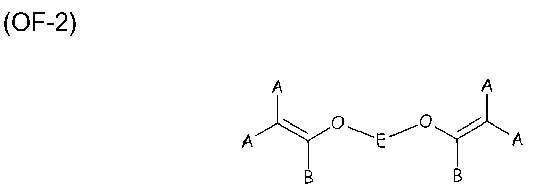 wherein each of A, equal or different from each other and at each occurrence, is independently selected from F, Cl, and H; each of B, equal or different from each other and at each occurrence, is independently selected from F, Cl, H and OR_{B}, wherein R_{B} is a branched or straight chain alkyl radical which can be partially, substantially or completely fluorinated or chlorinated; E is a divalent group having 2 to 10 carbon atom, optionally fluorinated, which may be inserted with ether linkages; preferably E is a -(CF₂)ₘ- group, with m being an integer from 3 to 5; a preferred bis-olefin of (OF-2) type is F₂C=CF-O-(CF₂)₅-O-CF=CF₂. 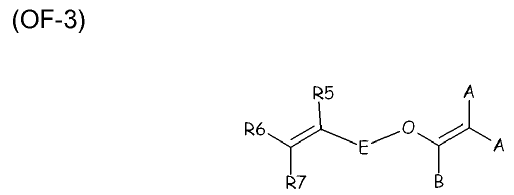 wherein E, A and B have the same meaning as above defined; R5, R6, R7, equal or different from each other, are H, F or C₁₋₅ alkyl or (per)fluoroalkyl group.

Exemplary fluoroelastomers (A) which can be used in the composition of the present invention are those having following monomers composition (in mol %, with respect to the total moles of recurring units) :
(i) vinylidene fluoride (VDF) 35-85 %, hexafluoropropene (HFP) 10-45 %, tetrafluoroethylene (TFE) 0-30 %, (per)fluoroalkylvinylethers (PAVE) 0-15 %; bis-olefin (OF): 0-5 %;
(ii) vinylidene fluoride (VDF) 50-80 %, (per)fluoroalkylvinylethers (PAVE) 5-50 %, tetrafluoroethylene (TFE) 0-20 %, bis-olefin (OF): 0-5 %;
(iii) vinylidene fluoride (VDF) 20-30 %, C₂-C₈ non-fluorinated olefins (Ol) 10-30 %, hexafluoropropene (HFP) and/or (per)fluoroalkylvinylethers (PAVE) 18-27 %, tetrafluoroethylene (TFE) 10-30 %; bis-olefin (OF): 0-5 %;
(iv) tetrafluoroethylene (TFE) 50-80 %, (per)fluoroalkylvinylethers (PAVE) 15-50 %; bis-olefin (OF): 0-5 %;
(v) tetrafluoroethylene (TFE) 45-65 %, C₂-C₈ non-fluorinated olefins (Ol) 20-55 %, vinylidene fluoride 0-30 %; bis-olefin (OF): 0-5 %;
(vi) tetrafluoroethylene (TFE) 32-60 % mol %, C₂-C₈ non-fluorinated olefins (Ol) 10-40 %, (per)fluoroalkylvinylethers (PAVE) 20-40 %, fluorovinyl ethers (MOVE) 0-30 %; bis-olefin (OF): 0-5 %;
(vii) tetrafluoroethylene (TFE) 33-75 %, (per)fluoroalkylvinylethers (PAVE) 15-45 %, vinylidene fluoride (VDF) 5-30 %, hexafluoropropene HFP 0-30 %; bis-olefin (OF): 0-5 %;
(viii) vinylidene fluoride (VDF) 35-85 %, (per)fluoro-methoxy-vinylethers (MOVE) 5-40 %, (per)fluoroalkylvinylethers (PAVE) 0-30 %, tetrafluoroethylene (TFE) 0-40 %, hexafluoropropene (HFP) 0-30 %; bis-olefin (OF): 0-5 %;
(ix) tetrafluoroethylene (TFE) 20-70 %, (per)fluoro-methoxy-vinylethers (MOVE) 25-75 %, (per)fluoroalkylvinylethers (PAVE) 0-50 %, bis-olefin (OF): 0-5 %.

The fluoroelastomer (A) can be prepared by any known method, such as emulsion or micro-emulsion polymerization, suspension or micro-suspension polymerization, bulk polymerization and solution polymerization.

According to certain embodiments of the invention, the fluoroelastomer (A) may comprise cure sites; the selection of cure sites is not particularly critical, provided that they ensure adequate reactive in curing in combination with the compound (DAIC-PFPE).

The fluoroelastomer (A) can comprise said cure sites either as pendant groups bonded to certain recurring units or as end groups of the polymer chain.

Among cure-site containing recurring units, mention can be notably made of :
(CSM-1) iodine or bromine containing monomers of formula: 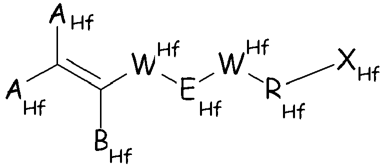 wherein each of A_{Hf}, equal to or different from each other and at each occurrence, is independently selected from F, Cl, and H; B_{Hf} is any of F, Cl, H and OR^{Hf}_{B}, wherein R^{HF}_{B} is a branched or straight chain alkyl radical which can be partially, substantially or completely fluorinated or chlorinated; each of W^{Hf} equal to or different from each other and at each occurrence, is independently a covalent bond or an oxygen atom; E_{Hf} is a divalent group having 2 to 10 carbon atom, optionally fluorinated; R_{Hf} is a branched or straight chain alkyl radical, which can be partially, substantially or completely fluorinated; and R_{Hf} is a halogen atom selected from the group consisting of Iodine and Bromine; which may be inserted with ether linkages; preferably E is a -(CF₂)ₘ- group, with m being an integer from 3 to 5;
(CSM-2) ethylenically unsaturated compounds comprising nitrile (-CN) groups, possibly (per)fluorinated.

Among cure-site containing monomers of type (CSM1), preferred monomers are those selected from the group consisting of:
(CSM1-A) iodine-containing perfluorovinylethers of formula: 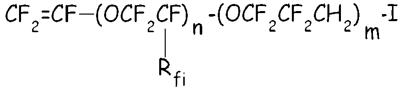 with m being an integer from 0 to 5 and n being an integer from 0 to 3, with the provisio that at least one of m and n is different from 0, and R_{fi} being F or CF₃; (as notably described in patents US 4745165 (AUSIMONT SPA) 17.05.1988 , US 4564662 (MINNESOTA MINING & MFG [US]) 14.01.1986 and EP 199138 A (DAIKIN IND LTD) 29.10.1986); and (CSM-1B) iodine-containing ethylenically unsaturated compounds of formula:

   CX¹X²=CX³-(CF₂CF₂)-I

   wherein each of X¹, X² and X³, equal to or different from each other, are independently H or F; and p is an integer from 1 to 5; among these compounds, mention can be made of CH₂=CHCF₂CF₂I, I(CF₂CF₂)₂ CH=CH₂, ICF₂CF₂CF=CH₂, I(CF₂CF₂)₂CF=CH₂;
(CSM-1C) iodine-containing ethylenically unsaturated compounds of formula:

   CHR=CH-Z-CH₂CHR-I

   wherein R is H or CH₃, Z is a C₁-C₁₈ (per)fluoroalkylene radical, linear or branched, optionally containing one or more ether oxygen atoms, or a (per)fluoropolyoxyalkylene radical; among these compounds, mention can be made of CH₂=CH-(CF₂)₄CH₂CH₂I, CH₂=CH-(CF₂)₆CH₂CH₂I, CH₂ =CH-(CF₂)₈CH₂CH₂I, CH₂=CH-(CF₂)₂CH₂CH₂I;
(CSM-1D) bromo and/or iodo alpha-olefins containing from 2 to 10 carbon atoms such as bromotrifluoroethylene or bromotetrafluorobutene described, for example, in US 4035565 (DU PONT) 12.07.1977 or other compounds bromo and/or iodo alpha-olefins disclosed in US 4694045 (DU PONT) 15.09.1987 .

Among cure-site containing monomers of type (CSM2), preferred monomers are (per)fluorinated and are especially those selected from the group consisting of:
(CSM2-A) perfluorovinyl ethers containing nitrile groups of formula CF₂ =CF-(OCF₂CFX^{CN})ₘ-O-(CF₂)ₙ-CN, with X^{CN} being F or CF₃, m being 0, 1, 2, 3 or 4; n being an integer from 1 to 12;
(CSM2-B) perfluorovinyl ethers containing nitrile groups of formula CF₂ =CF-(OCF₂CFX^{CN})_{m'}-O-CF₂-CF(CF₃)-CN, with X^{CN} being F or CF₃, m' being 0, 1, 2, 3 or 4.
Specific examples of cure-site containing monomers of type CSM2-A and CSM2-B suitable to the purposes of the present invention are notably those described in patents US 4281092 (DU PONT) 28.07.1981 , US 4281092 (DU PONT) 28.07.1981 , US 5447993 (DU PONT) 05.09.1995 and US 5789489 (DU PONT) 04.08.1998 .

Within the frame of the present invention, preferred fluoroelastomer (A) to be used in combination with compound (DAIC-PFPE) are fluoroelastomers (A) comprising iodine and/or bromine cure sites. Iodine and/or bromine is generally comprised in the fluoroelastomer (A) in an amount of 0.001 to 10% wt, with respect to the total weight of fluoroelastomer (A). Among these, iodine cure sites are those selected for maximizing curing rate.

According to this embodiment, for ensuring acceptable reactivity it is generally understood that the content of iodine and/or bromine in the fluoroelastomer (A) should be of at least 0.05 % wt, preferably of at least 0.1 % weight, more preferably of at least 0.15 % weight, with respect to the total weight of fluoroelastomer (A).

On the other side, amounts of iodine and/or bromine not exceeding preferably 7 % wt, more specifically not exceeding 5 % wt, or even not exceeding 4 % wt, with respect to the total weight of fluoroelastomer (A), are those generally selected for avoiding side reactions and/or detrimental effects on thermal stability.

These iodine or bromine cure sites of these preferred embodiments of the invention might be comprised as pending groups bound to the backbone of the fluoroelastomer (A) polymer chain or might be comprised as terminal groups of said polymer chain.

According to a first embodiment, the iodine and/or bromine cure sites are comprised as pending groups bound to the backbone of the fluoroelastomer polymer chain; the fluoroelastomer (A) according to this embodiment typically comprises recurring units derived from brominated and/or iodinated cure-site comonomers selected from:
- bromo and/or iodo alpha-olefins containing from 2 to 10 carbon atoms such as bromotrifluoroethylene or bromotetrafluorobutene described, for example, in US 4035565 (DU PONT) 12.07.1977 or other compounds bromo and/or iodo alpha-olefins disclosed in US 4694045 (DU PONT) 15.09.1987 ;
- iodo and/or bromo fluoroalkyl vinyl ethers (as notably described in patents US 4745165 (AUSIMONT SPA) 17.05.1988 , US 4564662 (MINNESOTA MINING & MFG [US]) 14.01.1986 and EP 199138 A (DAIKIN IND LTD) 29.10.1986).

The fluoroelastomer according to this embodiment generally comprises recurring units derived from brominated and/or iodinated cure-site monomers in amounts of 0.05 to 5 mol per 100 mol of all other recurring units of the fluoroelastomer (A), so as to advantageously ensure above mentioned iodine and/or bromine weight content.

According to a second preferred embodiment, the iodine and/or bromine cure sites (preferably iodine cure sites) are comprised as terminal groups of the fluoroelastomer (A) polymer chain; the fluoroelastomer according to this embodiment is generally obtained by addition to the polymerization medium during fluoroelastomer manufacture of anyone of:
- iodinated and/or brominated chain-transfer agent(s); suitable chain-chain transfer agents are typically those of formula R_{f}(I)ₓ(Br)_{y}, in which R_{f} is a (per)fluoroalkyl or a (per)fluorochloroalkyl containing from 1 to 8 carbon atoms, while x and y are integers between 0 and 2, with 1 ≤ x+y ≤ 2 (see, for example, patents US 4243770 (DAIKIN IND LTD) 06.01.1981 and US 4943622 (NIPPON MEKTRON KK) 24.07.1990); and
- alkali metal or alkaline-earth metal iodides and/or bromides, such as described notably in patent US 5173553 (AUSIMONT SRL) 22.12.1992 .

With the aim of achieving very low temperature performances, the fluoroelastomer (A) will be advantageously selected from VDF-based copolymers of TFE-based copolymers comprising recurring units derived from MOVE monomers as described above, and specifically from monomers having formula: CF₂=CFOCF₂OR_{f2}
wherein R_{f2} is selected from the group consisting of -CF₂CF₃; -CF₂CF₂ OCF₃; and -CF₃ (MOVE3).

With these regards, among above referred fluoroelastomers (A), VDF-based copolymers are particularly preferred and provide for increased crosslinking density, thus improved mechanical properties, while reducing the cost.

Among VDF-based copolymers, polymers comprising (with respect to total moles of recurring units of fluoroelastomer (A)):
- from 5 to 35 % moles, preferably from 7 to 30 % moles, more preferably from 15 to 25 % moles of recurring units derived from at least one (per)fluoro-methoxy-vinylethers (MOVE), as above detailed;
- from 0.5 to 35 % moles, preferably from 1 to 30 % moles, more preferably from 2 to 25 % moles of recurring units derived from at least one C₂-C₈ perfluoroolefin, typically selected from tetrafluoroethylene (TFE), hexafluoropropylene (HFP), hexafluoroisobutylene, preferably from TFE;
   with the provisio that the sum of recurring units derived from (per)fluoro-methoxy-vinylethers (MOVE) and from the perfluoroolefin is of at least 10 % moles, preferably at least 15 % moles, more preferably at least 17% moles;
- from 0 to 5 % moles, preferably from 0 to 3 % moles, more preferably from 0 to 2.5 % moles of recurring units derived from a bis-olefin (OF), as above detailed; and
- from 90 to 30 % moles, preferably from 85 to 40 % moles, more preferably from 83 to 50 % moles of recurring units derived from VDF.

Preferably, the VDF-based polymers, as above detailed, are intended for peroxide curing; to this aim, they generally comprise iodine cure sites as terminal groups of the fluoroelastomer (A) polymer chain, as above detailed, generally in the amounts mentioned above.

The composition (C) of the invention can be advantageously cured by peroxide curing technique.

To this aim, the composition (C) generally further comprises at least one suitable peroxide that is capable of generating radicals by thermal decomposition. Organic peroxides are generally employed.

Among most commonly used peroxides, mention can be made of dialkyl peroxides, for instance di-tert-butyl peroxide and 2,5-dimethyl-2,5-bis(tert-butylperoxy)hexane; dicumyl peroxide; dibenzoyl peroxide; di-tert-butyl perbenzoate; bis[1,3-dimethyl-3-(tert-butylperoxy)butyl] carbonate. Other suitable peroxide systems are those described, notably, in patent applications EP 136596 A (MONTEDISON SPA) 10.04.1985 and EP 410351 A (AUSIMONT SRL) 30.01.1991 , whose content is hereby incorporated by reference.

While compound (DAIC-PFPE) can be used as sole curing agent, in the composition (C), i.e. in the absence of any additional polyunsaturated compounds, embodiment's wherein the composition (C) comprises at least one polyunsaturated curing coagent different from compound (DAIC-PFPE) are still encompassed by the scope of the present invention.

According to these embodiment, the composition (C) further comprises at least one polyunsaturated compound different from compound (DAIC-PFPE), in amounts generally of from 0.5 to 10 phr, and preferably of from 1 to 7 phr, relative to 100 weight parts of fluoroelastomer (A).

Among polyunsaturated compound which may be used in combination with compound (DAIC-PFPE), the following are commonly used : triallyl cyanurate; triallyl isocyanurate (TAIC); tris(diallylamine)-s-triazine; triallyl phosphite; N,N-diallylacrylamide; N,N,N',N'-tetraallylmalonamide; trivinyl isocyanurate; 2,4,6-trivinyl methyltrisiloxane; bis-olefins (OF), as above detailed; triazines substituted with ethylenically unsaturated groups, such as notably those described in EP 860436 A (AUSIMONT SPA) 26.08.1998 and WO 97/05122 (DU PONT [US]) 13/02/1997 ; among above mentioned curing coagents, TAIC and bis-olefins (OF), as above detailed, and more specifically TAIC and bis-olefins of formula (OF-1), as above detailed, have been found to provide particularly good results.

The composition (C) may further additionally comprise ingredients which maybe commonly used for the peroxide curing of fluoroelastomers; more specifically, composition (C) may generally further comprise
(a) one or more than one metallic basic compound, in amounts generally of from 0.5 to 15 phr, and preferably of from 1 to 10 phr, relative to 100 weight parts of fluoroelastomer (A); metallic basic compounds are generally selected from the group consisting of (j) oxides or hydroxides of divalent metals, for instance oxides or hydroxides of Mg, Zn, Ca or Pb, and (jj) metal salts of a weak acid, for instance Ba, Na, K, Pb, Ca stearates, benzoates, carbonates, oxalates or phosphites;
(b) one or more than one acid acceptor which is not a metallic basic compound, in amounts generally of from 0.5 to 15 phr, and preferably of from 1 to 10 phr, relative to 100 weight parts of fluoroelastomer (A); these acid acceptors are generally selected from nitrogen-containing organic compounds, such as 1,8-bis(dimethylamino)naphthalene, octadecylamine, etc., as notably described in EP 708797 A (DU PONT) 01.05.1996 ;
(c) other conventional additives, such as fillers, thickeners, pigmen-ts, antioxidants, stabilizers, processing aids, and the like.

The invention also pertains to the use of the (per)fluoroelastomer composition as above described for fabricating shaped articles.

The composition (C) can be fabricated, e.g. by moulding (injection moulding, extrusion moulding), calendering, or extrusion, into the desired shaped article, which is advantageously subjected to vulcanization (curing) during the processing itself and/or in a subsequent step (post-treatment or post-cure), advantageously transforming the relatively soft, weak, fluoroelastomeric uncured composition into a finished article made of non-tacky, strong, insoluble, chemically and thermally resistant cured fluoroelastomer material.

Yet, the invention pertains to cured articles obtained from the composition (C), as above detailed. Said cured articles are generally obtained by moulding and curing the fluoroelastomer composition, as above detailed. these cured parts may be sealing articles, including O(square)-rings, packings, gaskets, diaphragms, shaft seals, valve stem seals, piston rings, crankshaft seals, cam shaft seals, and oil seals or maybe piping and tubings, in particular flexible hoses or other items, including conduits for delivery of hydrocarbon fluids and fuels.

Cured articles obtained from the composition (C), thanks to their ability to provide very low glass transition temperatures, are suitable for being used in fields of endeavours wherein low service temperatures are encountered, e.g. in particular as aerospace sealing parts, as elastomeric parts for automotive applications, including e.g. CNG and LPG systems, as well as parts for gas and/or oil drilling in cold environments (including e.g. off-shore operations).

Further in addition, the invention pertains to a method for processing the composition (C), as above detailed, according any of injection moulding, compression moulding, extrusion moulding, coating, screen printing technique, form-in-place technique.

The present invention will be now described in more detail with reference to the following examples, whose purpose is merely illustrative and not limitative of the scope of the invention.

### EXAMPLES

TECNOFLON® PFR94 is a peroxide-curable iodine end group-containing perfluoroelastomer, comprising recurring units derived tetrafluoroethylene (TFE); and perfluoro-methylvinylether (FKM-1, hereinafter), commercially available from Solvay Specialty Polymers Italy S.p.A.

TECNOFLON® VPL X75545 FKM is a peroxide-curable iodine end group-containing fluoroelastomer, comprising recurring units derived from vinylidene fluoride (VDF) 60.5% by moles; tetrafluoroethylene (TFE) 17.5% by moles; and perfluoro-methoxy-vinylethers having formula CF₂=CF-OCF₂O-CF₃ (MOVE3) 22% by moles (FKM-2, hereinafter), commercially available from Solvay Specialty Polymers Italy S.p.A.

### Preparative Example 1:

### Step 1(a) Preparation of a nonaflate derivative of PFPE diol [PFPE⁴⁰⁰⁰-nonaflate]

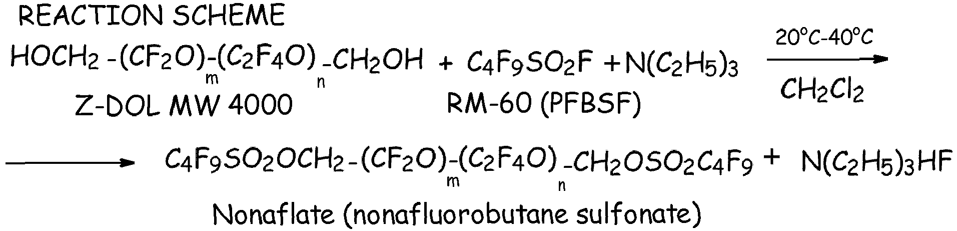

### PROPORTIONS:

Anhydrous Z-Dol 4000, comprising minor amount of non-functional and mono-functional analogous : Mw= 3811 g/mol ; Ew= 1975 g/eq ; 500 g ; 0.131mol; 0.253 eq -OH
C₄F₉-SO₂F : 99.42 g; M_{W}= 302.19 g/mol; mol=1.3 x 0.253 eq -OH Z-DOL = 0.329mol
TEA : 33.29 g ; Mw=101.19 g/mol; mol=1.3 * 0.253 eq -OH Z-DOL = 0.329mol
CH₂Cl₂: 700ml

### PROCEDURE:

Before beginning the synthesis, the necessary amount of Z-DOL must be dried by placing it in a round-bottomed flask and heated with magnetic stirring (900 - 1000 rpm) at 80°C under vacuum (0.1 mbar P_{RES}).

A three-necked, 1 liter round-bottomed glass reactor, equipped with a mechanical stirrer, a reflux condenser with an inert gas (N₂) compensator on top to keep the system anhydrous and inert, dripping funnel and an internal thermometer, is charged with anhydrous Z-DOL (M_{W} = 3811 g/mole; E_{W} = 1975 g/eq; 500 g; 131 mmols; 253 meq) and dichloromethane. The mechanical stirrer was turned on to ca. 300rpm, and the dishomogeneous mixture is heated to 40°C. Therefore the solution of RM-60 and TEA (dishomogeneous) was dripped in about twenty-five minutes. Following complete addition, the reaction mixture was kept at 40°C with 300rpm stirring under N₂ for a total reaction time of 5 hours. The complete conversion in nonaflate was verified by ¹⁹F-NMR of the crude reaction mixture, in particular by following the Z-DOL pre-terminal conversion.

The crude reaction mixture was transferred to an adequate separatory funnel where the lower fluorinated phase was drawn-off and it was washed 3 times with 100ml of Ethanol at 96%. The washed nonaflate was then dried over MgSO₄, filtered with 5 um PTFE membrane, and then the residual amount of solvent was evaporated at 50°C and 0.25 mbar residual Pressure employing a mechanical pump for a total distillation time of 3 hours.

Nonaflate obtained=528.22 g of a clear, pale yellow liquid.
Terminal groups: 96.2 mol% of -OCF₂CH₂-O-SO₂-C₄F₉; 0.4%mol -OCF₂ CH₂OH ; Non-functional : 3.4%mol
Isolated yield = Selectivity =99.58%
Average M_{W} = 4145 g/mole.
E_{W}= 2111 g/eq

### NMR characterization

-^{a}(CF₂-O)ₘ^{b}(-CF₂CF₂-O)ₙ-^{c}CF₂-^{d}CH₂-O-SO₂-^{e}CF₂^{f}CF₂^{g}CF₂^{h}CF₃
**₁₉F-NMR:** (vs. CFCl₃; ppm) **a:** -51; -52.5; -54.5; **b:** -88; -90; **c:** -77.5; -79.5; **e:** -109.2; **f:** -120.2; **g:** -125.2; **h:** -81.

### Step 2(a) Preparation of the DAIC-PFPE compound [DAIC-PFPE-1]

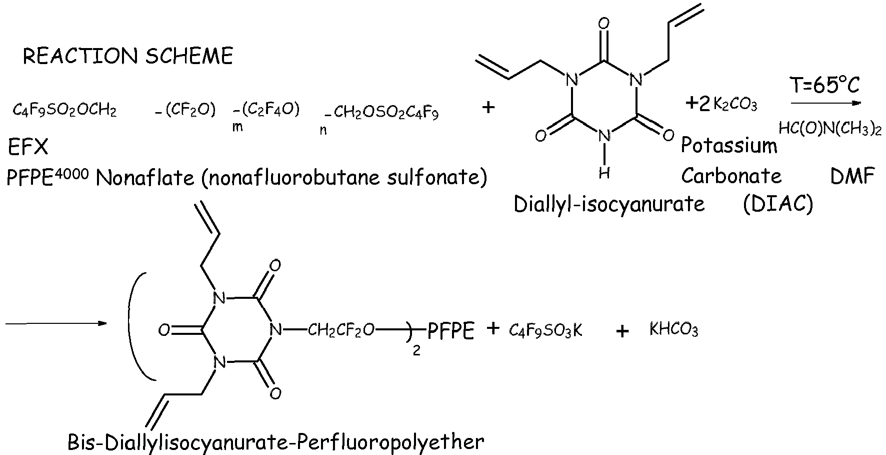

### PROPORTIONS:

DIAC :16.0 g; Mw=209.09 g/mol; 0.0765 mol
PFPE⁴⁰⁰⁰Nonaflate: 176.06 g; Mw=4145 g/mol; Ew = 2111g/eq; eq = 1.09 x 0.0765 mol DIAC = 0.0834 eq
K₂CO₃: 11.53g; M_{W}= 138.2 g/mol; 1.09 x 0.0765mol DIAC = 0.0834mol
DMF: 100ml
EFX : 45ml

### PROCEDURE:

In a 1 liter, three-necked round-bottomed glass reactor, equipped with a mechanical stirrer, a reflux condenser with an inert gas (N₂) compensator on top to keep the system anhydrous and inert, an internal thermometer, and a solid dispenser or dripping funnel, was charged with diallyl-isocyanurate and anhydrous dimethylformamide (DMF). The mechanical stirrer stirrer was turned on to ca. 300rpm at 20°C to obtain a clear colorless, homogeneous solution. Therefore K₂CO₃ was slowly added with the solid dispenser in ca. 35minutes. Following complete addition, the crude -mixture solution was heated to 60°C for 2 hours. As the acid-base reaction proceeded, the solution turned from colourless to white, opalescent, due to the isocyanurate-salt formed. At the end of the thermal treatment, the previously prepared homogeneous, transparent tan solution of PFPE⁴⁰⁰⁰Nonaflate (176.06 g; M_{W} = 4145 g/mol; E_{W} = 2111g/eq; 0.0834 eq) in EFX (45ml) are slowly dripped in 4h with a dripping funnel. The reaction was kept at 60°C and 300 rpm for an additional 8 hours bringing the total reaction time to 12 hours. When the stirrer was turned off, the opalescent dishomogeneous crude reaction mixture separated in two phases. The lower was the fluorinated phase and the upper was hydrogenates phase. The complete conversion of the nonaflate was verified by ¹⁹F-NMR of the crude reaction mixture, in particular by measuring the concentration of C₄F₉SO₃K salt formed in the upper-phase.

The crude reaction mixture was filtered with 5 µm PTFE membrane from the formed salt. This two-phase solution obtained was transferred to an adequate separatory funnel and it was washed 2 times with aqueous 3% H ₃O⁺Cl⁻ (1:1 v/v hydrogenates:water). The final pH of the H₂O layer was ensured to be below 3 for the washing to be complete.

The washed bis-diallylisocyanutate-perfluoropolyether was then dried over MgSO₄, filtered with 5 µm PTFE membrane, and then the residual amount of solvent was evaporated at 85°C and 0.25 mbar residual Pressure employing a mechanical pump for a total distillation time of 2 hours.

Bis-diallylisocyanutate-perfluoropolyether obtained = 150.11 g of a clear, pale yellow liquid.
Selectivity = >99 mol%.
Isolated yield = 93.8 mol%
Ave. M_{W} = 5348 g/mole.
Ave. E_{W}= 2886 g/eq

### NMR analyses.

**-ₐ(CF₂-O)_{mb}(-CF₂CF₂-O)_{n-c}CF_{2-d}CH₂-NC(=O)-N(ₑCH_{2f}CH=_{g}CH₂)-C(=O)-N(ₑCH_{2f}CH=_{g}CH₂)C(=O)-**
**19F-NMR:** (vs. CFCl₃; ppm) **a:** -52; -53.5; -55.2; **b:** -89; -90.5; **c:** -73.6; -75.4;
**1H-NMR** (vs TMS; ppm): **d:** +4.8; **e:** +4.65; **f:** +6.1; **g**:+5.45.

### General compounding and curing procedure

FKM-1 and FKM-2 were compounded with the ingredients as detailed below in a open mill. Plaques were cured in a pressed mould at 160°C and then post-treated in an air circulating oven in conditions (1+4 hours at 230°C).

Cure behaviour was characterized by Moving Die Rheometer (MDR), in conditions as specified below, by determining the following properties:
M_{L} = Minimum torque (lb x in)
M_{H} = Maximum torque (lb x in)
t_{S2} = Scorch time, time for two units rise from M_{L} (sec);
t₉₀ = Time to 90% state of cure (sec).

The tensile properties have been determined on specimens punched out from the plaques, according to the ASTM D 412 C Standard.

TS is the tensile strength in MPa;
M₁₀₀ is the modulus in MPa at an elongation of 100 %;
EB is the elongation at break in %.

The Shore A hardness (3") (HDS) has been determined on 3 pieces of plaque piled according to the ASTM D 2240 method.

Compression set (C-Set) values have been determined on O-rings (#214 class) according to the ASTM D 395-B method (70 hours at 200°C).

Glass transition temperature (T_{g}) of cured specimens was determined according to ASTM D3418 and by TR10, determinted by TR test according to ASTM D1329.

Stiction properties were evaluated according to a test method comprising:
- placing specimens between two sheets of Aluminium (thickness = 0.1 mm) at 23°C at a compression value of 25 %;
- maintaining said compression value for 24 hours at 200°C;
- cooling, still under compression, for 1 hour at 23 °C;
- releasing compression and determining maximum adhesion force by peel test (180°). Lower values of maximum adhesion force (MAF, in N) are representative of specimens having improved stiction behaviour (i.e. having a "non-stick" behaviour towards hard substrate, even after prolonged compression at high temperature).

Curing recipe and conditions and properties of cured sample are summarized, respectively, in tables 1 and 2.

**Table 1**

| Ingredient | | Ex.1 | Ex.2C | Ex.3 | Ex. 4C | Ex. 5 |
|---|---|---|---|---|---|---|
| FKM-1 | wt parts | 100 | 100 | - | - | - |
| FKM-2 | wt parts | - | - | 100 | 100 | 100 |
| DAIC-PFPE-1 | phr | 10.0 | - | 23.0 | - | 10.0 |
| Peroxide¹ | phr | 1.5 | 1.5 | 2.0 | 2.0 | 2.0 |
| TAIC² | phr | - | 5.0 | - | 5.0 | 5.0 |
| C-black³ | phr | 15.0 | 15.0 | 30.0 | 30.0 | 30.0 |
| Zinc Oxide⁴ | phr | - | - | 5.0 | 5.0 | 5.0 |

**1:** 45 % active dispersion of 2,5-dimethyl-2,5-di-t-butyl-peroxy-hexane in calcium carbonate, commercially available from Arkema under tradename Luperox® 101XL 45; **2:** Triallyl isocyanurate (75 %) dispersion in silica, commercially available as Drimix TAIC 75 from Finco; **3:** C-black N990 MT from Cancarb; **4:** ZnO ReagentPlus® from Sigma Aldrich.

**Table 2**

| Sample | | Ex.1 | Ex.2C | Ex.3 | Ex.4C | Ex.5 |
|---|---|---|---|---|---|---|
| MDR 12 min at 160°C | | | | | | |
| M_{L} | (lbxin) | 0.3 | 0.5 | 0.3 | 0.9 | 0.5 |
| M_{H} | (lbxin) | 25.3 | 27.5 | 20.1 | 24.2 | 23.8 |
| tₛ₂ | (s) | 41.0 | 38.0 | 72.0 | 51.0 | 64.0 |
| t₉₀ | (s) | 186.0 | 144.0 | 285.0 | 190.0 | 232.0 |

| Properties of cured specimen | | | | | | |
|---|---|---|---|---|---|---|
| TS | (MPa) | 14.2 | 19.0 | 10.7 | 12.0 | 14.7 |
| M₁₀₀ | (MPa) | 7.3 | 11.1 | 5.1 | 5.7 | 7.8 |
| E.B. | (%) | 149 | 135 | 161 | 160 | 162 |
| HDS | Shore A | 70 | 74 | 64 | 68 | 67 |
| C-Set | (%) | 40.1 | 25.9 | 28.5 | 19.6 | 20.8 |
| TR test | (°C) | -7 | -2 | -48.0 | -44.0 | |
| T_{g} | (°C) | | | | -46.0 | -46.3 |

| Stiction Properties | | | | | | |
|---|---|---|---|---|---|---|
| MAF | (N) | 198 | 344 | | | |

.

## Claims

1. A polyunsaturated compound having formula (I) [compound (DAIC-PFPE)]:
T^{A}-O-R_{f}-T^{A}' (I)
wherein:
- R_{f} is (per)fluoropolyoxyalkylene chain [chain (R_{f})] comprising recurring units having at least one catenary ether bond and at least one fluorocarbon moiety;
- T^{A} and T^{A}', equal to or different from each other, are selected from the group consisting of:
(i) C₁-C₂₄ (hydro)(fluoro)carbon groups, possibly comprising one or more than one of H, O, and Cl; and
(ii) (hydro)(fluoro)carbon group comprising at least one diallylisocyanurate group of formula: 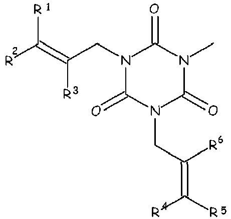 wherein each of R¹, R², R³, R⁴, R⁵, and R⁶ is, independently, a hydrogen atom or a C₁-C₃ hydrocarbon group, preferably a hydrogen atom (group T^{DAIC} ),
with the provisio that at least one of T^{A} and T^{A}' is a group T^{DAIC}, as above detailed.

2. The compound (DAIC-PFPE) of Claim 1, wherein chain (R_{f}) complies with formula:
-(CF₂CF₂O)_{a"}(CF₂O)_{b"}(CF₂(CF₂)_{z}CF₂O)_{c"}-,
wherein:
- z is 1 or 2;
- a", b", c" are integers ≥ 0, wherein chain (R_{f}) is generally selected so as to possess a number averaged molecular weight of 500 to 6000, preferably of 750 to 5000, even more preferably of 1000 to 4500.

3. The compound (DAIC-PFPE) of Claim 2, which complies with formula (II):
T^{B}-O-R*_{f}-T^{B}' (II)
wherein:
R*_{f} is a chain (R_{f}) as defined in Claim 2;
each of T^{B} and T^{B}', equal to or different from each other, are selected from
(j) a group of any of formulae -CF₃, -CF₂Cl, -CF₂CF₃, -CF(CF₃)₂ , -CF₂H, -CFH₂, -CF₂CH₃, -CF₂CHF₂, -CF₂CH₂F, -CFZ*CH₂OH, -CFZ*COOH, -CFZ*COORₕ and -CFZ*-CH₂(OCH₂CH₂)ₖ-OH, wherein k is ranging from 0 to 10, wherein Z* is F or CF₃; Rₕ is a C₁-C₆ hydrocarbon chain; and
(jj) a group T^{DAIC*}, of any of formulae -CFZ*CH₂-DAIC, and -CFZ*-CH₂(OCH₂ CH₂)ₖ-DAIC, wherein k is ranging from 0 to 10, Z* is F or CF₃; and DAIC is a diallylisocyanurate group of formula: 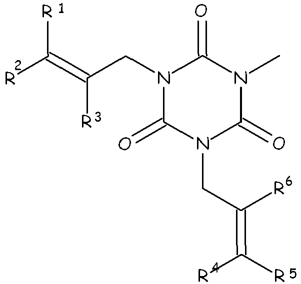 wherein each of R¹, R², R³, R⁴, R⁵, and R⁶ is, independently, a hydrogen atom or a C₁-C₃ hydrocarbon group, preferably a group of formula: 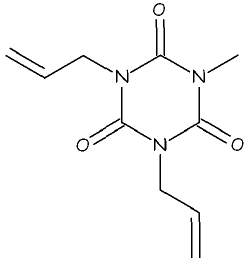 ,with the provisio that at least one of T^{B} and T^{B}' is a group T^{DAIC*}, as above detailed

4. The compound (DAIC-PFPE) of Claim 3, which complies with formula (III):
T^{C}-O-(CF₂CF₂O)ₐ^{,}(CFYO)_{b'}(CF₂CFYO)_{c'}(CF₂O)_{d'}(CF₂(CF₂)_{z}CF₂O)_{e'}-T^{c}',
wherein:
- Y is a C₁-C₅ perfluoro(oxy)alkyl group;
- z is 1 or 2;
- a', b', c', d', e' are integers ≥ 0;
- each of T^{C} and T^{C}', equal to or different from each other, are selected from (k) a group of any of formulae -CF₃, -CF₂Cl, -CF₂CF₃, -CF(CF₃)₂ , -CF₂H, -CFH₂, -CF₂CH₃, -CF₂CHF₂, -CF₂CH₂F, -CFZ*CH₂OH, and -CFZ^{*}-CH₂(OCH ₂CH₂)ₖ-OH, wherein k is ranging from 0 to 10, wherein Z* is F or CF₃; and (kk) a group T^{DAIC"} of any of formulae -CFZ*CH₂-DAIC, and -CFZ*-CH₂(OCH₂ CH₂)ₖ-DAIC, wherein Z* is F or CF₃; k is ranging from 0 to 10, and DAIC is a diallylisocyanurate group of formula: 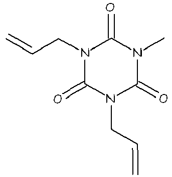 with the provisio that at least one of T^{B} and T^{B}' is a group T^{DAIC"}, as above detailed.

5. A method for manufacturing a compound (DAIC-PFPE) according to anyone of Claims 1 to 4, said method comprising reacting a (per)fluoropolyether precursor compound comprising a (per)fluoropolyoxyalkylene chain [chain (R_{f})] comprising recurring units having at least one catenary ether bond and at least one fluorocarbon moiety and possessing at least one reactive chain end, with at least one compound including a diallylisocyanurate group.

6. The method of Claim 5, the said method including reacting a hydroxylated (per)fluoropolyether precursor compound complying with formula (VI):
J-O-R_{f}-J' (IV)
wherein:
R_{f} is a chain R_{f}, as above detailed;
each of J and J', equal to or different from each other, are selected from
(I) groups of any of formulae -CF₃, -CF₂Cl, -CF₂CF₃, -CF(CF₃)₂ , -CF₂H, -CFH ₂, -CF₂CH₃, -CF₂CHF₂, -CF₂CH₂F, -CFZ*COOH, and -CFZ*COORₕ wherein Z* is F or CF₃; Rₕ is a C₁-C₆ hydrocarbon chain; and
(II) hydroxyl-containing groups [groups (J^{OH})] of any of formulae -CFZ*CH₂OH, and -CFZ*-CH₂(OCH₂CH₂)ₖ-OH, wherein k is ranging from 0 to 10, wherein Z* is F or CF₃,
with the provisio that at least one of J and J' is a group (J^{OH}), as above detailed;
with diallylisocyanurate of formula: 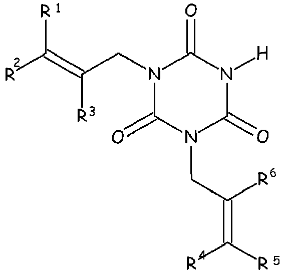 wherein each of R¹, R², R³, R⁴, R⁵, and R⁶ is, independently, a hydrogen atom or a C₁-C₃ hydrocarbon group; preferably with at least one diallylisocyanurate of formula:

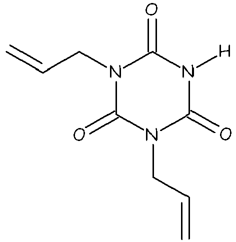

7. A method for crosslinking a fluoroelastomer, comprising using compound (DAIC-PFPE), according to anyone of Claims 1 to 4.

8. A (per)fluoroelastomer composition [composition (C)] comprising:
- a (per)fluoroelastomer [fluoroelastomer (A)] ; and
- at least one compound (DAIC-PFPE), according to anyone of Claims 1 to 4, said compound (DAIC-PFPE) being comprised in the composition in an amount of 0.5 to 50 phr, with respect to fluoroelastomer (A).

9. The composition (C) of claim 8, wherein the fluoroelastomer (A) is selected among:
(1) vinylidene fluoride (VDF)-based copolymers, in which VDF is copolymerized with at least one comonomer selected from the group consisting of :
(a) C₂-C₈ perfluoroolefins , such as tetrafluoroethylene (TFE), hexafluoropropylene (HFP);
(b) hydrogen-containing C₂-C₈ olefins, such as vinyl fluoride (VF), trifluoroethylene (TrFE), hexafluoroisobutene (HFIB), perfluoroalkyl ethylenes of formula CH₂ = CH-R_{f}, wherein R_{f} is a C₁-C₆ perfluoroalkyl group;
(c) C₂-C₈ fluoroolefins comprising at least one of iodine, chlorine and bromine, such as chlorotrifluoroethylene (CTFE);
(d) (per)fluoroalkylvinylethers (PAVE) of formula CF₂ = CFOR_{f}, wherein R_{f} is a C₁-C₆ (per)fluoroalkyl group, preferably CF₃, C₂F₅, C₃F₇;
(e) (per)fluoro-oxy-alkylvinylethers of formula CF₂ = CFOX, wherein X is a C₁ -C₁₂ ((per)fluoro)-oxyalkyl comprising catenary oxygen atoms, e.g. the perfluoro-2-propoxypropyl group;
(f) (per)fluorodioxoles having formula : 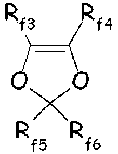 wherein each of R_{f3}, R_{f4}, R_{f5}, R_{f6}, equal to or different from each other, is independently selected from the group consisting of fluorine atom and C₁-C₆ (per)fluoroalkyl groups, optionally comprising one or more than one oxygen atom, such as notably -CF ₃, -C₂F₅, -C₃F₇, -OCF₃, -OCF₂CF₂OCF₃; preferably, perfluorodioxoles;
(g) (per)fluoro-methoxy-vinylethers (MOVE, hereinafter) having formula:
CF₂=CFOCF₂OR_{f2}
wherein R_{f2} is selected from the group consisting of C₁-C₆ (per)fluoroalkyls; C₅ -C₆ cyclic (per)fluoroalkyls; and C₂-C₆ (per)fluorooxyalkyls, comprising at least one catenary oxygen atom; R_{f2} is preferably -CF₂CF₃ (MOVE1); -CF₂CF₂OCF ₃ (MOVE2); or -CF₃ (MOVE3);
(h) C₂-C₈ non-fluorinated olefins (Ol), for example ethylene and propylene;
(i) ethylenically unsaturated compounds comprising nitrile (-CN) groups, possibly (per)fluorinated; and
(2) TFE-based copolymers, in which TFE is copolymerized with at least one comonomer selected from the group consisting of (c), (d), (e), (g), (h) and (i) as above detailed

10. The composition (C) of claim 8 or 9, wherein the fluoroelastomer (A) comprises recurring units derived from a bis-olefin [bis-olefin (OF)] having general formula : 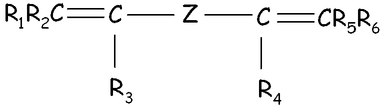 wherein R₁, R₂, R₃, R₄, R₅ and R₆, equal or different from each other, are H or C₁-C₅ alkyl; Z is a linear or branched C₁-C₁₈ hydrocarbon radical, optionally containing oxygen atoms, preferably at least partially fluorinated, or a (per)fluoropolyoxyalkylene radical.

11. The composition (C) of anyone of claims 8 to 10, wherein the fluoroelastomer (A) comprises iodine and/or bromine cure sites, such as the iodine and/or bromine is present in an amount of 0.001 to 10% wt, with respect to the total weight of fluoroelastomer (A).

12. The composition (C) of anyone of claims 8 to 11, wherein the fluoroelastomer (A) is selected from VDF-based copolymers comprising (with respect to total moles of recurring units of fluoroelastomer (A)):
- from 5 to 35 % moles, preferably from 7 to 30 % moles, more preferably from 15 to 25 % moles of recurring units derived from at least one (per)fluoro-methoxy-vinylethers (MOVE) having formula:
CF₂=CFOCF₂OR_{f2}
wherein R_{f2} is selected from the group consisting of C₁-C₆ (per)fluoroalkyls; C₅ -C₆ cyclic (per)fluoroalkyls; and C₂-C₆ (per)fluorooxyalkyls, comprising at least one catenary oxygen atom;
- from 0.5 to 35 % moles, preferably from 1 to 30 % moles, more preferably from 2 to 25 % moles of recurring units derived from at least one C₂-C₈ perfluoroolefin, typically selected from tetrafluoroethylene (TFE), hexafluoropropylene (HFP), hexafluoroisobutylene, preferably from TFE; with the provisio that the sum of recurring units derived from (per)fluoro-methoxy-vinylethers (MOVE) and from the perfluoroolefin is of at least 10 % moles, preferably at least 15 % moles, more preferably at least 17% moles;
- from 0 to 5 % moles, preferably from 0 to 3 % moles, more preferably from 0 to 2.5 % moles of recurring units derived from a bis-olefin (OF), as above detailed; and
- from 90 to 30 % moles, preferably from 85 to 40 % moles, more preferably from 83 to 50 % moles of recurring units derived from VDF.

13. The composition (C) of anyone of claims 8 to 12, said composition further comprising at least one peroxide, typically an organic peroxide, preferably selected from dialkyl peroxides, for instance di-tert-butyl peroxide and 2,5-dimethyl-2,5-bis(tert-butylperoxy)hexane; dicumyl peroxide; dibenzoyl peroxide; di-tert-butyl perbenzoate; bis[1,3-dimethyl-3-(tert-butylperoxy)butyl] carbonate.

14. The composition (C) of anyone of claims 8 to 13, said composition comprising at least one polyunsaturated curing coagent different from (DAIC-PFPE) compound.

15. A cured article obtained by moulding and curing the composition (C) according to anyone of claims 8 to 14, wherein the cured article may be selected from the group consisting of O(square)-rings, packings, gaskets, diaphragms, shaft seals, valve stem seals, piston rings, crankshaft seals, cam shaft seals, oil seals ,piping and tubings, in particular flexible hoses or other items, including conduits for delivery of hydrocarbon fluids and fuels.

16. A method for processing the composition (C), according to anyone of Claims 8 to 12, according any of injection moulding, compression moulding, extrusion moulding, coating, screen printing technique, form-in-place technique.

## Patentansprüche

1. Mehrfach ungesättigte Verbindung der Formel (I) [Verbindung (DAIC-PFPE)]:
T^{A}-O-R_{f}-T^{A}' (I)
wobei:
- R_{f} eine (Per)fluorpolyoxyalkylenkette [Kette (Rf)] ist, die Wiederholungseinheiten mit wenigstens einer Etherbindung in der Kette und wenigstens einer Fluorkohlenstoffeinheit umfasst;
- T^{A} und T^{A}' die gleich oder voneinander verschieden sind, ausgewählt sind aus der Gruppe bestehend aus:
(i) C₁-C₂₄ (Hydro) (fluor)kohlenstoffgruppen, gegebenenfalls umfassend eines oder mehr als eines von H, O und Cl; und
(ii) (Hydro)(fluor)kohlenstoffgruppen, umfassend wenigstens eine Diallylisocyanuratgruppe der Formel: 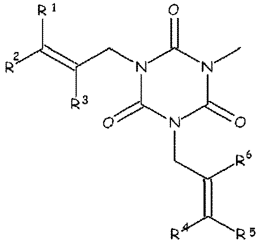 wobei jedes von R¹, R², R³, R⁴, R⁵ und R⁶ unabhängig ein Wasserstoffatom oder eine C₁-C₃Kohlenwasserstoffgruppe ist, vorzugsweise ein Wasserstoffatom (Gruppe T^{DAIC}),
mit der Maßgabe, dass wenigstens eines von T^{A} und T^{A}' eine wie oben beschriebene Gruppe T^{DAIC} ist.

2. Verbindung (DAIC-PFPE) gemäß Anspruch 1, wobei die Kette (R_{f}) der Formel:
-(CF₂CF₂O)_{a"}(CF₂O)_{b"}(CF₂(CF₂)_{z}CF₂O)_{c"}-
entspricht, wobei:
- z 1 oder 2 ist;
- a", b", c" ganze Zahlen ≥ 0 sind, wobei die Kette (R_{f}) allgemein so ausgewählt ist, dass sie ein anzahlgemitteltes Molekulargewicht von 500 bis 6000, vorzugsweise von 750 bis 5000, noch bevorzugter von 1000 bis 4500, aufweist.

3. Verbindung (DAIC-PFPE) gemäß Anspruch 2, die Formel (II) entspricht:
T^{B}-O-R*_{f}-T^{B}' (II)
wobei:
R*_{f} eine Kette (R_{f}) gemäß Anspruch 2 ist;
jedes von T^{B} und T^{B}', die gleich oder voneinander verschieden sind, ausgewählt ist aus
(j) einer Gruppe gemäß einer der Formeln -CF₃, -CF₂Cl, -CF₂CF₃, -CF(CF₃)₂, -CF₂H, -CFH₂, -CF₂CH₃, -CF₂CHF₂, -CF₂CH₂F, -CFZ*CH₂OH, -CFZ*COOH, -CFZ*COORₕ und -CFZ*-CH₂ (OCH₂CH₂)ₖ-OH, wobei k in dem Bereich von 0 bis 10 liegt, wobei Z* F oder CF₃ ist; Rₕ eine C₁-C₆Kohlenwasserstoffkette ist; und
(jj) einer Gruppe T^{DAIC*} gemäß einer der Formeln -CFZ*CH₂-DAIC und -CFZ*-CH₂ (OCH₂CH₂)ₖ-DAIC, wobei k in dem Bereich von 0 bis 10 liegt, Z* F oder CF₃ ist; und DAIC eine Diallylisocyanuratgruppe der Formel: 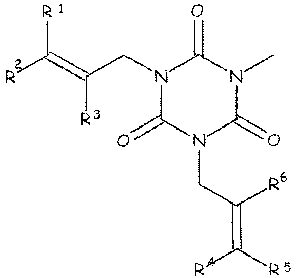 ist, wobei jedes von R¹, R², R³, R⁴, R⁵ und R⁶ unabhängig ein Wasserstoffatom oder eine C₁-C₃Kohlenwasserstoffgruppe ist, vorzugsweise eine Gruppe der Formel: 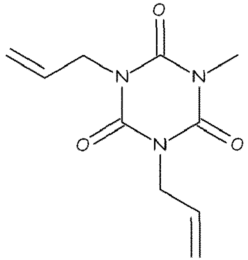 mit der Maßgabe, dass wenigstens eines von T^{B} und T^{B}' eine wie oben beschriebene Gruppe T^{DAIC*} ist.

4. Verbindung (DAIC-PFPE) gemäß Anspruch 3, die Formel (III) entspricht:
T^{C}-O-(CF₂CF₂O)_{a'}(CFYO)_{b'}(CF₂CFYO)_{c'}(CF₂O)_{d'}(CF₂(CF₂)_{z}CF₂O)_{e'}-T^{C},
wobei:
- Y eine C₁-C₅Perfluor (oxy) alkylgruppe ist;
- z 1 oder 2 ist;
- a', b', c', d', e' ganze Zahlen ≥ 0 sind;
- jedes von T^{C} und T^{C}', die gleich oder voneinander verschieden sind, ausgewählt ist aus
(k) einer Gruppe gemäß einer der Formeln - CF₃, -CF₂Cl, -CF₂CF₃, -CF(CF₃)₂, -CF₂H, - CFH₂, -CF₂CH₃, -CF₂CHF₂, -CF₂CH₂F, -CFZ*CH₂OH und -CFZ*-CH₂ (OCH₂CH₂)ₖ-OH, wobei k in dem Bereich von 0 bis 10 liegt, wobei Z* F oder CF₃ ist; und
(kk) einer Gruppe T^{DAIC}" gemäß einer der Formeln -CFZ*CH₂-DAIC und -CFZ*-CH₂ (OCH₂CH₂)ₖ-DAIC, wobei Z* F oder CF₃ ist; k in dem Bereich von 0 bis 10 liegt; und DAIC eine Diallylisocyanuratgruppe der Formel: 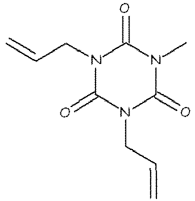 ist,
mit der Maßgabe, dass wenigstens eines von T^{B} und T^{B}' eine wie oben beschriebene Gruppe T^{DAIC"} ist.

5. Verfahren zur Herstellung einer Verbindung (DAIC-PFPE) gemäß einem der Ansprüche 1 bis 4, wobei das Verfahren Umsetzen einer (Per)fluorpolyether-Vorläuferverbindung umfassend eine (Per)fluorpolyoxyalkylenkette [Kette (R_{f})], die Wiederholungseinheiten mit wenigstens einer Etherbindung in der Kette und wenigstens einer Fluorkohlenstoffeinheit umfasst und wenigstens ein reaktionsfähiges Kettenende aufweist, mit wenigstens einer Gruppe umfassend eine Diallylisocyanuratgruppe umfasst.

6. Verfahren gemäß Anspruch 5, wobei das Verfahren Umsetzen einer hydroxylierten (Per)fluorpolyether-Vorläuferverbindung, die Formel (VI) entspricht:
J-O-R_{f}-J' (IV)
wobei:
R_{f} eine wie vorstehend beschriebene Kette R_{f} ist;
jedes von J und J', die gleich oder voneinander verschieden sind, ausgewählt ist aus
(I) Gruppen gemäß einer der Formeln -CF₃, -CF₂Cl, -CF₂CF₃, -CF(CF₃)₂, -CF₂H, -CFH₂, -CF₂CH₃, -CF₂CHF₂, -CF₂CH₂F, -CFZ*COOH und -CFZ*-COORₕ, wobei Z* F oder CF₃ ist; Rₕ eine C₁-C₆Kohlenwasserstoffkette ist; und
(II) Hydroxy-enthaltenden Gruppen [Gruppen (J^{OH})] gemäß einer der Formeln -CFZ*CH₂OH und -CFZ*-CH₂(OCH₂CH₂)ₖ-OH, wobei k in dem Bereich von 0 bis 10 liegt, wobei Z* F oder CF₃ ist,
mit der Maßgabe, dass wenigstens eines von J und J' eine wie oben beschriebene Gruppe (J^{OH}) ist;
mit einem Diallylisocyanurat der Formel: 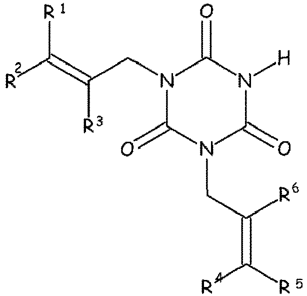 wobei jedes von R¹, R², R³, R⁴, R⁵ und R⁶ unabhängig ein Wasserstoffatom oder eine C₁-C₃Kohlenwasserstoffgruppe ist; vorzugsweise mit wenigstens einem Diallylisocyanurat der Formel: 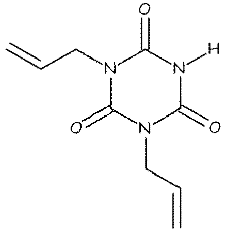 umfasst.

7. Verfahren zum Vernetzen eines Fluorelastomers, umfassend die Verwendung der Verbindung (DAIC-PFPE) gemäß einem der Ansprüche 1 bis 4.

8. (Per)fluorelastomerzusammensetzung [Zusammensetzung (C)] umfassend:
- ein (Per)fluorelastomer [Fluorelastomer (A)]; und
- wenigstens eine Verbindung (DAIC-PFPE) gemäß einem der Ansprüche 1 bis 4, wobei die Verbindung (DAIC-PFPE) in einer Menge von 0,5 bis 50 phr, bezogen auf das Fluorelastomer (A), in der Zusammensetzung enthalten ist.

9. Zusammensetzung (C) gemäß Anspruch 8, wobei das Fluorelastomer (A) ausgewählt ist aus:
(1) Copolymeren auf Vinylidenfluorid(VDF)-Basis, bei denen VDF mit wenigstens einem Comonomer copolymerisiert ist, das ausgewählt ist aus der Gruppe bestehend aus:
(a) C₂-C₈Perfluorolefinen, wie z. B. Tetrafluorethylen (TFE), Hexafluorpropylen (HFP);
(b) Wasserstoff-enthaltenden C₂-C₈Olefinen, wie z. B. Vinylfluorid (VF), Trifluorethylen (TrFE), Hexafluorisobuten (HFIB), Perfluoralkylethylenen der Formel CH₂=CH-R_{f}, wobei R_{f} eine C₁-C₆Perfluoralkylgruppe ist;
(c) C₂-C₈Fluorolefinen, die wenigstens eines von Iod, Chlor und Brom umfassen, wie z. B. Chlortrifluorethylen (CTFE);
(d) (Per)fluoralkylvinylethern (PAVE) der Formel CF₂=CFOR_{f}, wobei R_{f} eine C₁-C₆(Per)fluoralkylgruppe ist, vorzugsweise CF₃, C₂F₅, C₃F₇;
(e) (Per)fluoroxyalkylvinylethern der Formel CF₂=CFOX, wobei X ein C₁-C₁₂ ((Per) fluor) oxyalkyl ist, das Sauerstoffatome in der Kette umfasst, z. B. die Perfluor-2-propoxypropylgruppe;
(f) (Per)fluordioxolen der Formel: 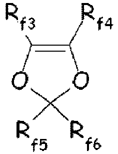 wobei jedes von R_{f3}, R_{f4}, R_{f5}, R_{f6}, die gleich oder voneinander verschieden sind, unabhängig ausgewählt ist aus der Gruppe bestehend aus Fluoratom und C₁-C₆(Per)fluoralkylgruppen, gegebenenfalls umfassend ein oder mehr als ein Sauerstoffatom, wie z. B. insbesondere -CF₃, -C₂F₅, -C₃F₇, -OCF₃, -OCF₂CF₂OCF₃; vorzugsweise Perfluordioxole;
(g) (Per)fluormethoxyvinylethern (nachstehend MOVE) der Formel:
CF₂=CFOCF₂OR_{f2},
wobei R_{f2} ausgewählt ist aus der Gruppe bestehend aus C₁-C₆(Per)fluoralkylen; cyclischen C₅-C₆(Per)fluoralkylen; und C₂-C₆(Per)fluoroxyalkylen, die wenigstens ein Sauerstoffatom in der Kette umfassen; wobei R_{f2} vorzugsweise -CF₂CF₃ (MOVE1) ;
-CF₂CF₂OCF₃ (MOVE2); oder -CF₃ (MOVE3) ist;
(h) nichtfluorierten C₂-C₈Olefinen (Ol), beispielsweise Ethylen und Propylen;
(i) ethylenisch ungesättigten Verbindungen, die Nitrilgruppen (-CN) umfassen, gegebenenfalls (per)fluoriert; und
(2) Copolymeren auf TFE-Basis, bei denen TFE mit wenigstens einem Comonomer ausgewählt aus der Gruppe bestehend aus wie vorstehend beschriebenem (c), (d), (e), (g), (h) und (i) copolymerisiert ist.

10. Zusammensetzung (C) gemäß Anspruch 8 oder 9, wobei das Fluorelastomer (A) Wiederholungseinheiten umfasst, die von einem Bisolefin [Bisolefin (OF)] der allgemeinen Formel: 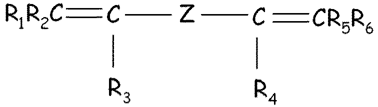 abgeleitet sind, wobei R₁, R₂, R₃, R₄, R₅ und R₆, die gleich oder voneinander verschieden sind, H oder C₁-C₅Alkyl sind; Z ein linearer oder verzweigter C₁-C₁₈-Kohlenwasserstoffrest, der gegebenenfalls Sauerstoffatome enthält, vorzugsweise wenigstens teilweise fluoriert, oder ein (Per)fluorpolyoxyalkylenrest ist.

11. Zusammensetzung (C) gemäß einem der Ansprüche 8 bis 10, wobei das Fluorelastomer (A) Iod- und/oder Brom-Härtungsstellen umfasst, wobei das Iod und/oder Brom in einer Menge von 0,001 bis 10 Gew.-%, bezogen auf das Gesamtgewicht des Fluorelastomers (A), vorhanden ist.

12. Zusammensetzung (C) gemäß einem der Ansprüche 8 bis 11, wobei das Fluorelastomer (A) ausgewählt ist aus Copolymeren auf VDF-Basis, umfassend (bezogen auf die Gesamt-Mol an Wiederholungseinheiten des Fluorelastomers (A)):
- von 5 bis 35 mol-%, vorzugsweise von 7 bis 30 mol-%, bevorzugter von 15 bis 25 mol-%, Wiederholungseinheiten, die von wenigstens einem (Per)fluormethoxyvinylether (MOVE) der Formel:
CF₂=CFOCF₂OR_{f2}
abgeleitet sind, wobei R_{f2} ausgewählt ist aus der Gruppe bestehend aus C₁-C₆(Per)fluoralkylen; cyclischen C₅-C₆ (Per) fluoralkylen; und C₂-C₆(Per)fluoroxyalkylen, die wenigstens ein Sauerstoff in der Kette umfassen;
- von 0,5 bis 35 mol-%, vorzugsweise von 1 bis 30 mol-%, bevorzugter von 2 bis 25 mol-%, Wiederholungseinheiten, die von wenigstens einem C₂-C₈Perfluorolefin abgeleitet sind, gewöhnlich ausgewählt aus Tetrafluorethylen (TFE), Hexafluorpropylen (HFP), Hexafluorisobutylen, vorzugsweise aus TFE;
mit der Maßgabe, dass die Summe der von (Per)fluormethoxyvinylethern (MOVE) abgeleiteten Wiederholungseinheiten und des Perfluorolefins wenigstens 10 mol-% beträgt, vorzugsweise wenigstens 15 mol-%, bevorzugter wenigstens 17 mol-%;
- von 0 bis 5 mol-%, vorzugsweise von 0 bis 3 mol-%, bevorzugter von 0 bis 2,5 mol-%, Wiederholungseinheiten, die von einem wie vorstehend beschriebenen Bisolefin (OF) abgeleitet sind; und
- von 90 bis 30 mol-%, vorzugsweise von 85 bis 40 mol-%, bevorzugter von 83 bis 50 mol-%, Wiederholungseinheiten, die von VDF abgeleitet sind.

13. Zusammensetzung (C) gemäß einem der Ansprüche 8 bis 12, wobei die Zusammensetzung ferner wenigstens ein Peroxid umfasst, gewöhnlich ein organisches Peroxid, vorzugsweise ausgewählt aus Dialkylperoxiden, beispielsweise Di-tert-butylperoxid und 2,5-Dimethyl-2,5-bis(tert-butylperoxy)hexan; Dicumylperoxid; Dibenzoylperoxid; Di-tert-butylperbenzoat; Bis[1,3-dimethyl-3-(tert-butylperoxy)butyl]carbonat.

14. Zusammensetzung (C) gemäß einem der Ansprüche 8 bis 13, wobei die Zusammensetzung wenigstens ein mehrfach ungesättigtes Koagulationsmittel umfasst, das von einer (DAIC-PFPE)-Verbindung verschieden ist.

15. Gehärteter Gegenstand, erhalten durch Formen und Härten der Zusammensetzung (C) gemäß einem der Ansprüche 8 bis 14, wobei der gehärtete Gegenstand ausgewählt sein kann aus der Gruppe bestehend aus O(Quadrat)-Ringen, Packungen, Dichtungen, Diaphragmen, Wellendichtungen, Ventilschaftdichtungen, Kolbenringen, Kurbelwellendichtungen, Nockenwellendichtungen, Öldichtungen, Rohren und Leitungen, insbesondere flexiblen Schläuchen und anderen Elementen, einschließlich Leitungen zum Befördern von Kohlenwasserstofffluiden und Kraftstoffen.

16. Verfahren zur Verarbeitung der Zusammensetzung (C) gemäß einem der Ansprüche 8 bis 12 durch eines von Spritzguss, Druckguss, Extrusion, Beschichten, Siebdruckverfahren, Form-in-Place-Verfahren.

## Revendications

1. Composé polyinsaturé ayant la formule (I) [composé (DAIC-PFPE)] :
T^{A}-O-R_{f}-T^{A}' (I)
dans laquelle :
- R_{f} est une chaîne (per)fluoropolyoxyalkylène [chaîne (R_{f})] comprenant des motifs récurrents ayant au moins une liaison éther caténaire et au moins un fragment fluorocarboné ;
- T^{A} et T^{A'}, identiques ou différents l'un de l'autre, sont choisis dans le groupe constitué de :
(i) groupes (hydro) (fluoro) carbonés en C₁-C₂₄, comprenant éventuellement l'un ou plusieurs parmi H, O et Cl ; et
(ii) groupe (hydro) (fluoro) carboné comprenant au moins un groupe isocyanurate de diallyle de formule : 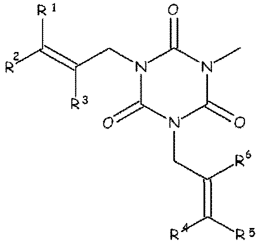 dans laquelle chacun de R¹, R², R³, R⁴, R⁵ et R⁶ est, indépendamment, un atome d'hydrogène ou un groupe hydrocarboné en C₁-C₃, de préférence un atome d'hydrogène (groupe T^{DAIC}),
à condition qu'au moins l'un de T^{A} et T^{A'} soit un groupe T^{DAIC}, comme détaillé ci-dessus.

2. Composé (DAIC-PFPE) selon la revendication 1, dans lequel la chaîne (R_{f}) est conforme à la formule :
- (CF₂CF₂O)_{a"}(OF₂O)_{b"}(CF₂(CF₂)_{z}CF₂O)_{c"}-, dans laquelle :
- z est 1 ou 2 ;
- a", b", c" sont des entiers ≥0, dans lequel la chaîne (R_{f}) est généralement choisie de façon à posséder un poids moléculaire moyen en nombre de 500 à 6000, de préférence de 750 à 5000, encore plus préférablement de 1000 à 4500.

3. Composé (DAIC-PFPE) selon la revendication 2, qui est conforme à la formule (II) :
T^{B}-O-R^{*}_{f}-T^{B'} (II)
dans laquelle :
R^{*}_{f} est une chaîne (R_{f}) telle que définie dans la revendication 2 ;
chacun de T^{B} et T^{B'}, identiques ou différents l'un de l'autre, est choisi parmi
(j) un groupe de l'une quelconque des formules -CF₃, -CF₂Cl, -CF₂CF₃, -CF (CF₃)₂, -CF₂H, -CFH₂,-CF₂CH₃, -CF₂CHF₂, -CF₂CH₂F, -CFZ*CH₂OH, -CFZ*COOH, -CFZ*COORₕ et -CFZ*-CH₂ (OCH₂CH₂)ₖ-OH, où k est dans la plage de 0 à 10, où Z* est F ou CF₃ ; Rₕ est une chaîne hydrocarbonée en C₁-C₆ ; et
(jj) un groupe T^{DAIC*} de l'une quelconque des formules -CFZ*CH₂-DAIC, et -CFZ*-CH₂(OCH₂CH₂)ₖ-DAIC, où k est dans la plage de 0 à 10, Z* est F ou CF₃ ; et DAIC est un groupe isocyanurate de diallyle de formule : 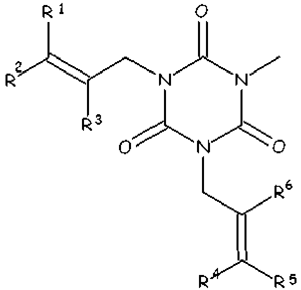 dans laquelle chacun de R¹, R², R³, R⁴, R⁵ et R⁶ est, indépendamment, un atome d'hydrogène ou un groupe hydrocarboné en C₁-C₃, de préférence un groupe de formule : 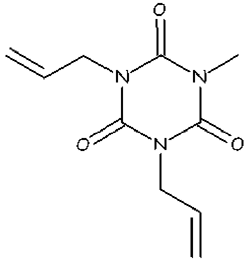 à condition qu'au moins l'un de T^{B} et T^{B'} soit un groupe T^{DAIC*}, comme détaillé ci-dessus.

4. Composé (DAIC-PFPE) selon la revendication 3, qui est conforme à la formule (III) :
T^{C}-O- (CF₂CF₂O)_{a'} (CFYO)_{b'} (CF₂CFYO)_{c'}(CF₂O)_{d'} (CF₂(CF₂)_{z}CF₂O)_{e'}-T^{C'},
dans laquelle :
- Y est un groupe perfluoro(oxy)alkyle en C₁-C₅;
- z est 1 ou 2 ;
- a', b', c', d', e' sont des entiers ≥0 ;
- chacun de T^{C} et T^{C'}, identiques ou différents l'un de l'autre, est choisi parmi
(k) un groupe de l'une quelconque des formules -CF₃, -CF₂Cl, -CF₂CF₃, -CF (CF₃)₂, -CF₂H, -CFH₂,-CF₂CH₃, -CF₂CHF₂, -CF₂CH₂F, -CFZ*CH₂OH, et -CFZ*-CH₂(OCH₂CH₂)ₖ-OH, où k est dans la plage de 0 à 10, où Z* est F ou CF₃; et
(kk) un groupe T^{DAIC"} de l'une quelconque des formules -CFZ*CH₂-DAIC, et -CFZ*-CH₂(OCH₂CH₂)ₖ-DAIC, où Z* est F ou CF₃; k est dans la plage de 0 à 10, et DAIC est un groupe isocyanurate de diallyle de formule : 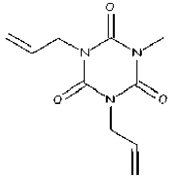 à condition qu'au moins l'un de T^{B} et T^{B'} soit un groupe T^{DAIC"} , comme détaillé ci-dessus.

5. Procédé de fabrication d'un composé (DAIC-PFPE) selon l'une quelconque des revendications 1 à 4, ledit procédé comprenant la réaction d'un composé précurseur de (per)fluoropolyéther comprenant une chaîne (per)fluoropolyoxyalkylène [chaîne (R_{f})] comprenant des motifs récurrents ayant au moins une liaison éther caténaire et au moins un fragment fluorocarboné et possédant au moins une extrémité de chaîne réactive, avec au moins un composé comprenant un groupe isocyanurate de diallyle.

6. Procédé selon la revendication 5, ledit procédé comprenant la réaction d'un composé précurseur de (per)fluoropolyéther hydroxylé conforme à la formule (VI) :
J-O-R_{f}-J' (IV)
dans laquelle :
R_{f} est une chaîne R_{f}, comme détaillé ci-dessus ;
chacun de J et J', identiques ou différents l'un de l'autre, est choisi parmi
(I) des groupes de l'une quelconque des formules -CF₃, -CF₂Cl, -CF₂CF₃, -CF (CF₃)₂, -CF₂H, -CFH₂, -CF₂CH₃, -CF₂CHF₂, -CF₂CH₂F, -CFZ*COOH, et -CFZ*COORₕ où Z* est F ou CF₃ ; Rₕ est une chaîne hydrocarbonée en C₁-C₆; et
(II) des groupes contenant hydroxyle [groupes (J^{OH})] de l'une quelconque des formules -CFZ*CH₂OH, et -CFZ*-CH₂(OCH₂CH₂)ₖ-OH, où k est dans la plage de 0 à 10, où Z* est F ou CF₃,
à condition qu'au moins l'un de J et J' soit un groupe (J^{OH}), comme détaillé ci-dessus ;
avec un isocyanurate de diallyle de formule : 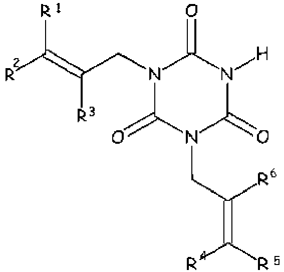 dans laquelle chacun de R¹, R², R³, R⁴, R⁵, et R⁶ est, indépendamment, un atome d'hydrogène ou un groupe hydrocarboné en C₁-C₃; de préférence avec au moins un isocyanurate de diallyle de formule :

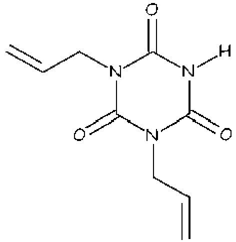

7. Procédé de réticulation d'un fluoroélastomère, comprenant l'utilisation d'un composé (DAIC-PFPE), selon l'une quelconque des revendications 1 à 4.

8. Composition de (per)fluoroélastomère [composition (C)] comprenant :
- un (per)fluoroélastomère [fluoroélastomère (A)] ; et
- au moins un composé (DAIC-PFPE), selon l'une quelconque des revendications 1 à 4, ledit composé (DAIC-PFPE) étant compris dans la composition en une quantité de 0,5 à 50 phr, par rapport au fluoroélastomère (A).

9. Composition (C) selon la revendication 8, dans laquelle le fluoroélastomère (A) est choisi parmi :
(1) des copolymères à base de fluorure de vinylidène (VDF), où VDF est copolymérisé avec au moins un comonomère choisi dans le groupe constitué de :
(a) perfluorooléfines en C₂-C₈, telles que le tétrafluoroéthylène (TFE), l'hexafluoropropylène (HFP) ;
(b) oléfines en C₂-C₈ contenant de l'hydrogène, telles que le fluorure de vinyle (VF), le trifluoroéthylène (TrFE), l'hexafluoroisobutène (HFIB), des perfluoroalkyle-éthylènes de formule CH₂=CH-R_{f}, où R_{f} est un groupe perfluoroalkyle en C₁-C₆;
(c) fluorooléfines en C₂-C₈ comprenant au moins l'un de l'iode, du chlore et du brome, telles que le chlorotrifluoroéthylène (CTFE) ;
(d) éthers (per)fluoroalkylvinyliques (PAVE) de formule CF₂=CFOR_{f}, où R_{f} est un groupe (per)fluoroalkyle en C₁-C₆, de préférence CF₃, C₂F₅, C₃F₇;
(e) éthers (per)fluoro-oxy-alkylvinyliques de formule CF₂=CFOX, où X est un ((per)fluoro)-oxyalkyle en C₁-C₁₂ comprenant des atomes d'oxygène caténaires, par exemple le groupe perfluoro-2-propoxypropyle ;
(f) des (per)fluorodioxoles ayant la formule : 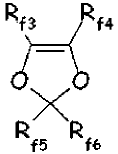 dans laquelle chacun de R_{f3}, R_{f4}, R_{f5}, R_{f6}, identiques ou différents les uns des autres, est indépendamment choisi dans le groupe constitué d'un atome de fluor et de groupes (per)fluoroalkyle en C₁-C₆, comprenant facultativement un ou plusieurs atomes d'oxygène, tels que, notamment, -CF₃, -C₂F₅, -C₃F₇, -OCF₃, -OCF₂CF₂OCF₃; de préférence, des perfluorodioxoles ;
(g) éthers (per)fluoro-méthoxy-vinyliques (MOVE, ci-après) ayant la formule :
CF₂=CFOCF₂OR_{f2}
où R_{f2} est choisi dans le groupe constitué de (per)fluoroalkyles en C₁-C₆; (per)fluoroalkyles cycliques en C₅-C₆; et (per)fluorooxyalkyles en C₂-C₆, comprenant au moins un atome d'oxygène caténaire ; R_{f2} est de préférence -CF₂CF₃ (MOVE1) ; -CF₂CF₂OCF₃ (MOVE2) ; ou -CF₃ (MOVE3) ;
(h) oléfines (Ol) non fluorées en C₂-C₈, par exemple éthylène et propylène ;
(i) composés éthyléniquement insaturés comprenant des groupes nitrile (-CN), éventuellement (per)fluorés ; et (2) copolymères à base de TFE, où TFE est copolymérisé avec au moins un comonomère choisi dans le groupe constitué de (c), (d), (e), (g), (h) et (i) comme détaillé ci-dessus.

10. Composition (C) selon la revendication 8 ou 9, dans laquelle le fluoroélastomère (A) comprend des motifs récurrents dérivés d'une bis-oléfine [bis-oléfine (OF)] ayant la formule générale : 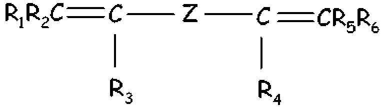 dans laquelle R₁, R₂, R₃, R₄, R₅ et R₆, identiques ou différent les uns des autres, sont H ou alkyle en C₁-C₅ ; Z est un radical hydrocarboné en C₁-C₁₈ linéaire ou ramifié, contenant facultativement des atomes d'oxygène, de préférence au moins partiellement fluoré, ou un radical (per)fluoropolyoxyalkylène.

11. Composition (C) selon l'une quelconque des revendications 8 à 10, dans laquelle le fluoroélastomère (A) comprend des sites de durcissement iodés et/ou bromés, de sorte que l'iode et/ou le brome soit présent en une quantité de 0,001 à 10 % en poids, par rapport au poids total de fluoroélastomère (A).

12. Composition (C) selon l'une quelconque des revendications 8 à 11, dans laquelle le fluoroélastomère (A) est choisi parmi des copolymères à base de VDF comprenant (par rapport aux moles totales de motifs récurrents de fluoroélastomère (A)) :
- de 5 à 35 % en moles, de préférence de 7 à 30 % en moles, plus préférablement de 15 à 25 % en moles de motifs récurrents dérivés d'au moins un éther (per)fluoro-méthoxy-vinylique (MOVE) ayant la formule :
CF₂=CFOCF₂OR_{f2}
dans laquelle R_{f2} est choisi dans le groupe constitué de (per)fluoroalkyles en C₁-C₆; (per)fluoroalkyles cycliques en C₅-C₆; et (per)fluorooxyalkyles en C₂-C₆, comprenant au moins un atome d'oxygène caténaire ;
- de 0,5 à 35 % en moles, de préférence de 1 à 30 % en moles, plus préférablement de 2 à 25 % en moles de motifs récurrents dérivés d'au moins une perfluorooléfine en C₂-C₈, typiquement choisie parmi le tétrafluoroéthylène (TFE), l'hexafluoropropylène (HFP), l'hexafluoroisobutylène, de préférence parmi TFE; à condition que la somme des motifs récurrents dérivés d'éthers (per)fluoro-méthoxy-vinyliques (MOVE) et de la perfluorooléfine soit d'au moins 10 % en moles, de préférence au moins 15 % en moles, plus préférablement au moins 17 % en moles ;
- de 0 à 5 % en moles, de préférence de 0 à 3 % en moles, plus préférablement de 0 à 2,5 % en moles de motifs récurrents dérivés d'une bis-oléfine (OF), comme détaillé ci-dessus ; et
- de 90 à 30 % en moles, de préférence de 85 à 40 % en moles, plus préférablement de 83 à 50 % en moles de motifs récurrents dérivés de VDF.

13. Composition (C) selon l'une quelconque des revendications 8 à 12, ladite composition comprenant en outre au moins un peroxyde, typiquement un peroxyde organique, de préférence choisi parmi des peroxydes de dialkyle, par exemple le peroxyde de di-tert-butyle et le 2,5-diméthyl-2,5-bis(tert-butylperoxy)hexane ; le peroxyde de dicumyle ; le peroxyde de dibenzoyle ; le perbenzoate de di-tert-butyle ; le carbonate de bis[1,3-diméthyl-3-(tert-butylperoxy)butyle].

14. Composition (C) selon l'une quelconque des revendications 8 à 13, ladite composition comprenant au moins un coagent de durcissement polyinsaturé différent du composé (DAIC-PFPE).

15. Article durci obtenu par moulage et durcissement de la composition (C) selon l'une quelconque des revendications 8 à 14, l'article durci pouvant être choisi dans le groupe constitué de joints toriques (carrés), garnitures, joints, diaphragmes, joints d'arbre, joints de tige de soupape, segments de piston, joints de vilebrequin, joints d'arbre à came, joints d'étanchéité d'huile, tuyauterie et tubulures, en particulier des tuyaux flexibles ou d'autres articles, comprenant des conduites de distribution de fluides hydrocarbures et de carburants.

16. Procédé de traitement de la composition (C), selon l'une quelconque des revendications 8 à 12, selon l'un quelconque parmi le moulage par injection, le moulage par compression, le moulage par extrusion, le revêtement, une technique de sérigraphie, une technique FIP (Form-In-Place).
